# EUROPEAN PATENT SPECIFICATION

(11) **EP 3 157 263 B1**
(45) Date of publication and mention of the grant of the patent: **18.04.2018**
(21) Application number: 15189634.7
(22) Date of filing: 13.10.2015
(51) Int. Cl.: H04N 21/61, H04H 40/90, H04N 7/20

(54) **MULTIPLE DWELLING CHANNEL STACKING SYSTEM**
STAPELSYSTEM MIT MEHREREN VERWEILKANÄLEN
SYSTÈME D'EMPILEMENT DE CANAUX D'HABITATIONS MULTIPLES

(43) Date of publication of application: 19.04.2017
(73) Proprietor: Unitron NV, 8970 Poperinge (BE)
(72) Inventor: Goemaere, Joris, 8480 Ichtegem (BE); Viaene, Davy, 8660 De Panne (BE); Deleu, Stephen, 9080 Beervelde (BE)
(74) Representative: IP HILLS NV

(56) References cited:
- WO-A1-2015/150422
- US-A1- 2003 179 723
- US-A1- 2014 033 258

## Description

### Technical Field

The present invention generally relates to the field of satellite signal distribution systems for multiple dwelling units. More particularly a multiple dwelling channel stacking system, for example for distributing satellite TV signals.

### Background

In satellite signal distribution systems, there can be made a distinction between Single Family Units (SFU) that are able to handle distribution of suitable signals to one or more receiving devices for an individual user in a single housing environment, and Multiple dwelling units (MDU), often also referred to as multi-dwelling units, which are able to handle distribution of suitable signals to a plurality of dwellings of a plurality of different users, such as for example a plurality of apartments or flats or the like in which one or more receiving devices are to be provided with suitable signals.

In a typical satellite signal distribution system, one or more satellite dishes are provided for capturing the high frequency (RF) satellite signal transmitted by one or more satellites. The parabolic shape of the satellite dish reflects the focal point of the dish. A feedhorn is mounted at or near this focal point and feeds the RF satellite signal by means of a suitably connected waveguide to a low-noise block downconverter (LNB). The LNB converts the high frequency RF satellite signals from electromagnetic waves or radio waves to electrical signals and shifts the signals from for example the high frequency C-band, Ku-band, Ka-band, etc. to intermediate frequency (IF) signals, for example in the L-band range, which are more suitable for further distribution, for example by means of coaxial cables. In a multiple dwelling context typically each high frequency RF satellite signal is downconverted by the LNB to four intermediate frequency (IF) signals, each provided on a separate coaxial cable to a headend, one or more multiswitches, or other suitable distribution devices for further distribution to the receiving devices or tuners, such as for example Set Top Boxes (STB), Personal video recorders (PVR), etc. , as present in a plurality of dwellings of the multiple dwelling unit (MDU).

The high frequency RF satellite signals and their corresponding downconverted IF signals comprise a plurality of smaller frequency bands, which are generally referred to as transponders or channels, each containing one or more TV, radio or data channels. For example, in Europe, a Ku band RF satellite signal with a frequency band from 10.7 to 12.75 GHz, comprising 2 polarisations, for example a vertical and a horizontal polarisation, is used for direct broadcast satellite services such as those carried by the Astra satellites. This RF satellite signal for example comprises a plurality of transponders with a bandwith of 36MHz of which the center frequencies are spaced 39Mhz apart. The RF satellite signal is conventionally downconverted by means of an LNB to four IF signals comprising a bandwith ranging from about 0.95GHz-2.15GHz : a horizontal low band ; a horizontal high band, a vertical low band; and a vertical high band. Each of these IF signals comprising the respective plurality of transponders of the respective downconverted RF satellite signal frequency range, for example 24 transponders. These four IF signals are connected by means of four coaxial cables to the inputs of a distribution device, such as for example a satellite multiswitch, for further distribution to receiving devices such as for example Set Top Boxes (STB). If more than one RF satellite signal is received, for example by means of a plurality of satellite dishes, it is clear that a corresponding plurality of four IF signals and four extra cables are needed per RF satellite signal. All these cables are then connected to the inputs of a satellite distribution device for further distribution to the receiving devices. In a multiple dwelling context distribution devices are often also provided with cascading outputs for cascading the received IF signals to the inputs of a further distribution device, as each distribution device is only able to serve a predetermined maximum number of receiving devices.

A particular category of satellite signal distribution devices are referred to as Channel Stacking Switch (CSS), also referred to as SCR (Satellite Channel Router), Unicable, OLT (One Line Technology), etc.) operating in a channel stacking mode. Such a Channel stacking Switch, also referred to as a Channel Stacking System in the context of this application, is a particular type of a satellite signal distribution device, which allows each of the outputs of the distribution device to be connected to a plurality of receiver devices by means of a single cable. Additionally each of the plurality of receiving devices which is connected to an output of the Channel Stacking System is able to select and receive any desired transponder available from the downconverted IF signals, independently of the other receiving devices that are connected to this single cable. This is achieved by means of the generation of a CSS output signal, which comprises a dedicated user band for each of the receivers connected to by means of this single cable, as generally known to a person skilled in the art. This means that each receiver device that is connected to a single cable is provided with a dedicated user band with a bandwidth approximately the same as a transponder, for example 36MHz. The centre frequencies of each of the user bands of the receiver devices connected to a single cable are also spaced at a particular distance, for example about 100MHz or more for analogue CSS and for example 39MHz or more, or the same distance as for the transponders, in the case of digital CSS. Further these centre frequencies of the user bands of the receiver devices connected to a single cable are provided in a frequency range which largely corresponds to the frequency range of the received IF signals, such as for example 0.95GHz to 2.15GHz. Each of the desired transponders for each of the receiver devices connected to a single cable is selected from the respective IF input signal, for example by means of a suitable filtering operation, and subsequently frequency translated to the respective user band centre frequency assigned to each the requesting receiving device. Finally the user bands of each of the requesting receiver devices are combined into a CSS output signal that is provided via the single cable to the connected receiver devices, which by each tuning into their assigned user band are able to receive the requested transponder. Several proprietary and standardised schemes are known in relation to generation of the CSS output signal and the related control signals for transponder selection, user band allocation, etc. There is for example known a European industry standard for distributing satellite signals over a single coaxial cable from CENELEC EN50494, which has been defined in 2007 and is developed by a consortium led by SES, which supports 8 receiving devices connected by means of a single cable to an output of a distribution device and selection of transponders from up to 8 downconverted satellite IF signals. Recently there is also currently drafted the CENELEC EN 50607 standard which supports up to a maximum of 32 receiving devices connected by a single cable to an output of the distribution device, and selection of transponders from up to a maximum number of 256 downconverted satellite IF signals.

Multiple Dwelling Unit (MDU) CSS distribution devices that were based on analog technology often required multiple analog channel stacking integrated circuits comprising complex analog filtering circuits, programmable mixers for each user band, etc and a dedicated microcontroller for implementing the appropriate communication protocol for MDU applications in addition. This limited the maximum number of user bands that could be achieved, and an increase in the number of user bands led to a corresponding increase in power consumption of all analog components. One known MDU CSS distribution device is for example the SUS 5581 / 33 NFA LEGACY 63, as presented in the SPAUN product catalogue, page 50, as retrieved from http://www.spaun.de/pdf/spaun 17 en.pdf on 17/12/2014, which is able to provide a maximum of 8 userbands on a single output, or a maximum of 3 user bands on three outputs. The maximum number of available user bands per output is limited by the connected analog hardware, this means by means of the number of parallel analog frequency paths for each user band, which are physically connected to the output. In a first 1 x8 CSS configuration the parallel frequency translation paths for the generation of 8 user bands are combined into a single output signal. In a second 3x3 CSS configuration, three distinct outputs, each receive a combined output signal of a distinct group of 3 parallel frequency translation paths. The number of maximum receiving devices that can be served by each output is thus rather limited and needs to be determined by means of the hardware configuration.

Recently components for use in Channel Stacking Systems referred to as digital Channel Stacking Systems or digital Channel Stacking Switches (dCSS) have become available. For example, Maxlinear provides the MxL86x family of digital satellite Channel Stacking Switch, which is provided as a System on Chip (SoCs) or an integrated circuit (IC) which provides the functionality of most of the analogue filtering, frequency translation, etc. components referred to above, by means of a digital signal processing integrated circuit. A digitised version of the IF signals, for example by means suitable analogue to digital converters (ADC), is provided to the digital signal processing circuitry, which generates a digital version of the required CSS output signal, that can subsequently be provided in the form of an analog CSS output signal comprising a plurality of userbands to the receiving devices, for example after conversion by means of a suitable digital to analog converter (DAC). This allows the generation of an increased maximum number of userbands of which the centre frequencies can be positioned closer to each other as mentioned above, without the corresponding increase in power consumption, as there is no longer a need for a corresponding increase in parallel analogue frequency translation paths. In case of the MxL86x family of dCSS SoC up to a maximum of 24 user bands can be provided. An alternative dCSS Soc is for example provided by Entropic as the EN5520 integrated circuit, that is able to provide up to a maximum of 32 user bands. Still a further dCSS system that makes use of a Digital Switching and Signal Processing (DSSP) circuit is known from WO2009/143082. It is clear that such dCSS circuits when used in a MDU distribution device provide for an increase in the maximum number of user bands that can be provided, a corresponding reduction design complexity, system cost, and power consumption.

However, the use of these dCSS circuits as a CSS module in a multiple dwelling channel stacking system has led to a new problem, especially when the generated user bands need to be distributed via a plurality of CSS output connectors, each of these CSS output connectors being connected by means of a single cable to the receiving devices of a different user in a different dwelling of the multiple dwelling unit. Specific difficulties arise in a multiple dwelling context as, because the number of user bands provided to an output is no longer limited by the number of analogue frequency translation paths, that some of the users claim an unallowable share of the available user bands. Further, installation or reconfiguration of receiving devices that impacts user band allocation of one dwelling could potentially propagate to the user band allocation of receiving devices in another dwelling. Still further as in a multiple dwelling context the one, two or three available outputs of the dCSS circuit of the CSS module will often be shared amongst a higher number of four, six, eight, ... of output connectors, this could give rise to privacy issues as user bands of output connectors for different users of different dwellings that are connected to the same output of the dCSS circuit will provide a CSS output signal comprising all user bands and selected transponders for all the receiving devices of all these different users.

A system for solving user band allocation issues that could arise in a Single Family unit context is for example known from WO2012/145220. This system keeps track of previously assigned user bands and the corresponding receiver devices. When a user band request from a new receiver device would result in the need to provide a previously assigned user band, it will first be checked with the previous previously assigned receiver device of this user band, whether such reallocation is allowed. Although such a system, when applied in a multiple dwelling context, could potentially reduce the number of user band allocation events that impact another user, however this requires all receiver devices of all users to be compatible with this functionality. Further, it does not provide a solution to problems mentioned above regarding to users claiming an unallowable share of the available user bands, privacy, etc. Solving the problem by providing multiple dSSC circuits so that their outputs no longer need to be shared between a higher number of output connectors of a MDU CSS system also leads to an increase in power consumption, design complexity, system cost, etc.

There has been made available in October 2014 an SES Technical Recommendations Document titled "Universal Wideband LNB" comprising a technical specification for the kind of equipment currently called ASTRA Universal Wideband LNB. Such an LNB will, similar as described above be able to receive RF satellite signals in a frequency range of 10.70 to 12.75 GHz in horizontal and vertical polarisation and output downconverted IF signals, which are referred to as Wideband IF signals. These wideband IF signals are provided on two IF outputs. A first output providing a downconverted IF signal of the entire RF signal in the horizontal polarisation in the frequency range of 290MHz - 2340 MHz. A second output providing a downconverted IF signal of the entire RF signal in the vertical polarisation in the frequency range of 290MHz - 2340 MHz. Such a wideband LNB is thus able to provide wideband IF signals comprising all transponders by means of two coaxial cables instead of four cables as described above.

Therefor there still is a need for an improved multiple dwelling channel stacking system that overcomes the above mentioned draw backs and is able to provide a high number of user bands, with a reduced design complexity, a reduced power comsumption, a reduced level of propagation of user band allocation issues, an increased level of privacy, a reduced risk for claiming an unallowable share of available user bands, etc.

### Summary

According to an aspect of the invention, there is provided a channel stacking system comprising:
- A plurality of CSS output connectors, configured to provide a respective plurality of CSS output connector signals to a respective plurality of connected groups of receivers, each receiver of the connected group of receivers configured to request a user band of the CSS output connector signal;
- A CSS module comprising one or more CSS module outputs and configured to generate for each CSS module output a corresponding CSS module output signal comprising a set of four or more user bands; and
- At least one CSS output interface configured to respectively couple one CSS module output to a corresponding CSS output connector subset comprising two or more corresponding CSS output connectors, such that each of the corresponding CSS output connector signals comprises a respective subset comprising two or more user bands of the corresponding CSS module output signal, wherein the corresponding CSS output connector subset comprises a first CSS output connector and at least one further CSS output connector:
- the CSS output interface coupled to the first CSS output connector without frequency translation; and
- the CSS output interface coupled to the at least one further CSS output connector via a respective frequency translation module, which is configured to frequency translate the corresponding subset of user bands.

Further advantageous and/or optional embodiments have been defined by means of the dependent claims.

In this way there is provided a channel stacking system, more particularly a multiple dwelling channel stacking system that overcomes the abovementioned problems, which is able to provide a high number of user bands and distribute this in a fair way amongst the different users in a multiple dwelling context. This is realised in a way that multiplies the number of CSS output connectors with respect to the number of module outputs of a CSS module. Additionally, this is realised in a way that enables the plurality of CSS output connectors of a single CSS module output, to advantageously manage a plurality of different groups of receivers. Even when this single CSS module output was only designed to support a single group of receivers, the plurality of CSS output connectors of its corresponding CSS output connector subset enable support of multiple groups of receivers in an advantageous way by means of the CSS output interface and the frequency translation module. In this way a channel stacking system making use of such a CSS module, which is often a System on Chip or Integrated Circuit comprising a limited number of CSS module outputs, is made more suitable for a multiple dwelling context. Additionally this is accomplished in a way that optimizes reduced power consumption as a number of output connectors which is a multiple of the number of CSS module output connectors is made available, without the need to provide a corresponding multiple of such CSS modules. It will be clear from the description that several embodiments are provided which ensure a particular simple setup and installation of the multiple dwelling channel stacking system, a reduced level of propagation of user band allocation issues, an increased level of privacy, a reduced risk for claiming an unallowable share of available user bands, etc.

### Brief Description of the Drawings

Figure 1 illustrates an embodiment of a multiple dwelling channel stacking system according to the invention in a multiple dwelling context;
Figure 2 illustrates the embodiment of the multiple dwelling channel stacking system of Figure 1 in more detail;
Figures 3 to 10 illustrate schematically different embodiments of signals and correlation tables for use with the multiple dwelling channel stacking system according to the embodiments of Figures 1 or 2;
Figures 11 to 13 schematically illustrate still further embodiments of the multiple dwelling channel stacking system; and
Figure 14 schematically illustrates an alternative correlation table for use with still a further embodiment of the multiple dwelling channel stacking system.

### Detailed Description of Embodiment(s)

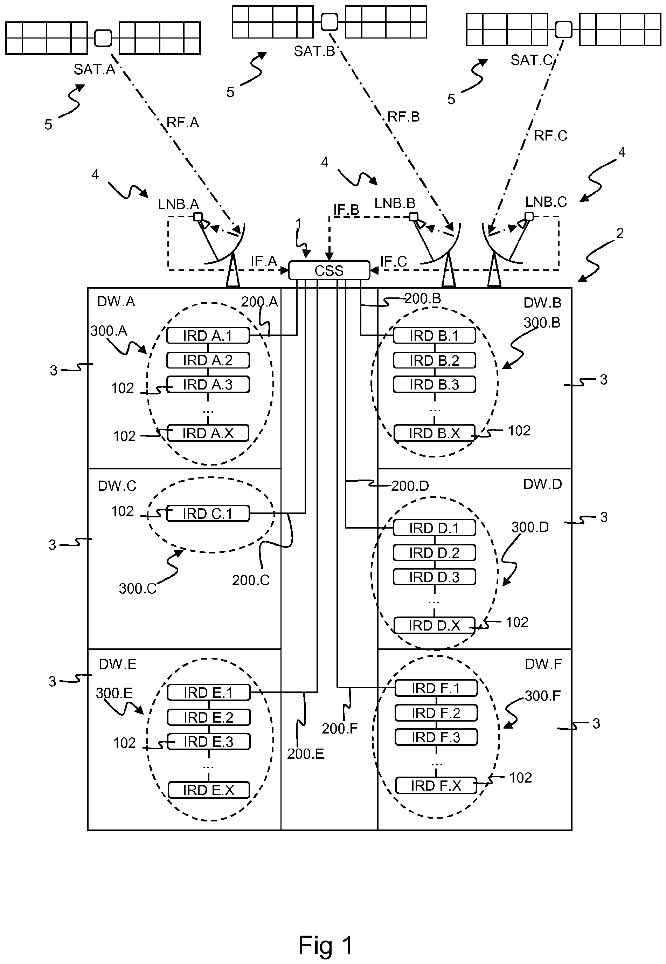

Figure 1 shows an embodiment of a multiple dwelling channel stacking system 1. As shown the multiple dwelling channel stacking system 1 is in use in an embodiment of an apartment building or the like, which comprises six dwellings 3, referred to as DW.A to DW.F. These dwellings 3 are for example respective flats of different respective users or subscribers of satellite signal services. It is clear that alternative embodiments are possible with a different plurality of dwellings 3 than the six shown in Figure 1, and/or a different multiple dwelling context than for example the apartment building shown, as long as the satellite signals need to be distributed to a plurality of dwellings of a plurality of different users of satellite signal services. As will be explained in more detail below, the multiple dwelling channel stacking system 1 handles the distribution of suitable signals to the plurality of dwellings 3 of the plurality of different users. In this way one or more receiving devices 102 arranged in each of these different dwellings 3 will be provided with suitable signals from the multiple dwelling channel stacking system 1. These receiving devices 102 being for example Set Top Boxes (STB), Personal video recorders (PVR), etc.

As shown in Figure 1, there are provided three satellite dishes 4. It is clear that according to alternative embodiments one or more satellite dishes 4 could be provided. The three satellite dishes 4 respectively capture the high frequency or RF satellite signal, transmitted by three corresponding satellites 5. As shown the satellite referred to as SAT.A transmits RF satellite signal RF.A. This RF satellite signal RF.A is reflected by the parabolic shape of the satellite dish to a feedhorn which feeds the RF satellite signal RF.A to a low-noise block downconverter or LNB, referred to as LNB.A in Figure 1. LNB.A converts the RF satellite signals RF.A received by the satellite dish 4 to intermediate frequency or IF signals referred to as IF.A. These IF signals IF.A are subsequently provided to the multiple dwelling channel stacking system 1, for example by means of suitable coaxial cables.

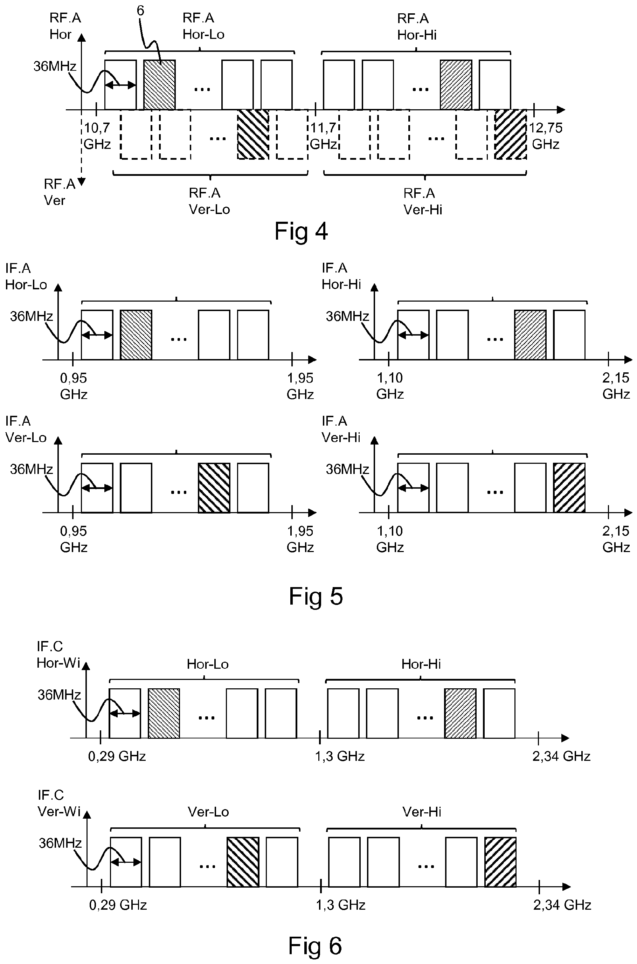

Figure 4 shows an embodiment of the RF satellite signal RF.A in more detail. The embodiment shown corresponds to a European Ku band RF satellite signal with a frequency band from 10.7 to 12.75 GHz. As shown this RF satellite signal comprising 2 polarisations, a vertical polarisation referred to as "RF.A Ve" and a horizontal polarisation referred to as "RF.A Hor". Each of these polarisations of the RF satellite signal RF.A comprises a plurality of transponders 6. According to the embodiment shown, the transponders 6 comprise a bandwith of 36MHz and their center frequencies are spaced 39Mhz apart. As already mentioned above, each of these transponders for example comprises one or more TV, Radio or data channels of for example direct broadcast satellite services, such as those carried by the Astra satellites. It is however clear that alternative embodiments of RF satellite signals are possible.

As shown in Figure 5, the RF satellite signal RF.A is downconverted by means of LNB.A to four IF signals IF.A, each comprising a bandwidth ranging from about 0.95GHz-1.95GHz or 1,10GHz-2,15GHz. A first IF signal comprises a horizontal low band and is referred to as "IF.A Hor-Lo". A second IF signal comprises a horizontal high band and is referred to as "IF.A Hor-Hi". A third IF signal comprises a vertical low band and is referred to as "IF.A Ver-Lo". A fourth IF signal comprises a vertical high band and is referred to as "IF.A Ver-Hi". Each of these four IF signals comprises the respective plurality of transponders of the respective downconverted corresponding RF satellite signal frequency range as indicated in Figure 4. As shown, the IF.A Hor-Lo signal comprises the plurality of transponders in the frequency range of 10,7GHz to 11,7GHz of the RF.A Hor signal. As further shown the IF.A Hor-Hi signal comprises the plurality of transponders in the frequency range of 11,7GHz to 12,75GHz of the RF.A Hor signal. A similar frequency range is applied for distributing the transponders of the RF.A Ver signal to the IF.A Ver-Lo signal and IF.A Ver-Hi signal respectively. Each of the four IF.A signals in this way for example comprises 10 or more transponders 6. It is clear that alternative embodiments are possible in which for example alternative RF satellite signals could be downconverted by means of an LNB to one or more IF signals, which could for example comprise an alternative bandwidth and/or frequency range. Such alternative LNB types are for example known as a Standard North America Ku band LNB which downconverts a horizontal and vertical linear polarized RF satellite signal in a frequency range of 11.70 GHz - 12.20 GHz to an intermediate frequency range of 950MHz - 1,450 MHz, or for example a North America DBS LNB which downconverts a right hand and left hand circular polarized RF satellite signal in a frequency range of 12.20GHz - 12.70 GHz to an intermediate frequency range of 950MHz - 1,450 MHz, or for example a C-band LNB which downconverts a horizontal and vertical linear polarized RF satellite signal in a frequency range of 3.40 GHz - 4.20 GHz to an intermediate frequency range of 950MHz - 1,750 MHz, etc.

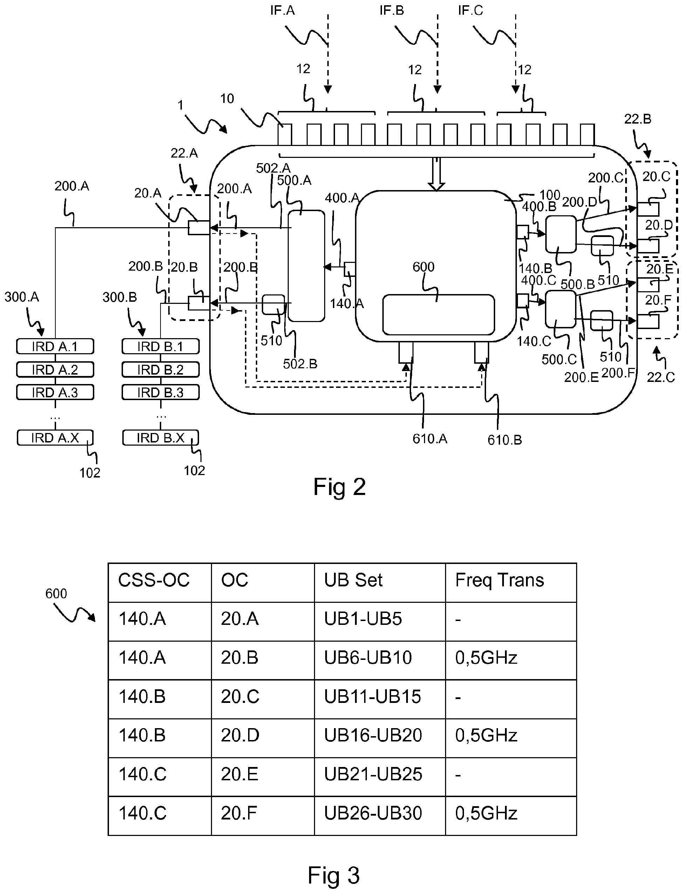

As shown in more detail in Figure 2, which shows the multiple dwelling channel stacking system 1 of the embodiment of Figure 1 in more detail, These four IF.A signals will be provided by LNB.A to a group 12 of four input connectors 10 of the multiple dwelling channel stacking system 1, for example by means of four coaxial cables. As shown in Figure 1, the multiple dwelling channel stacking system 1 will then handle further distribution to receiving devices 102.

As shown in Figure 1 and 2, the RF satellite signal RF.B received from satellite SAT.B and downconverted to intermediate frequency signals IF.B by LNB.B results, similar as explained above with reference to RF satellite signal RF.A and intermediate frequency signals IF.A, in a corresponding group of four intermediate frequency signals IF.B. As shown in Figure 2, these four IF signals IF.B are provided, for example by means of four coaxial cables, to a corresponding group 12 of four input connectors 10 of the multiple dwelling channel stacking system 1 for further distribution to the receiving devices 102.

As further shown in Figure 1 and 2, there is still a further RF satellite signal RF.C received from satellite SAT.C. According to the embodiment shown, this RF.C signal is downconverted to intermediate frequency signals IF.C by a further LNB referenced as LNB.C. LNB.C, different from the universal LNBs LNB.A and LNB.B, according to this embodiment is a universal Wideband LNB already mentioned above. Similar as described above with reference to RF satellite signal RF.A and shown in Figure 4, LNB.C will according to this embodiment receive RF satellite signal RF.A Hor in a frequency range of 10.70 to 12.75 GHz in a horizontal polarisation and RF.A Ver in a similar frequency range in a vertical polarisation. However LNB.C will downconvert the RF satellite signal into only two IF signals, instead of four. As shown in Figure 6, these intermediate signals "IF.C Hor-Wi" and "IF.C Ver-Wi" provided by the universal wideband LNB LNB.C, are referred to as Wideband IF signals. As shown in Figure 6, the first wideband IF signal IF.C Hor-Wi comprises providing a downconverted IF signal of the entire RF signal in the horizontal polarisation in the frequency range of 290MHz - 2340 MHz. As shown, the IF.C Ver-Wi signal comprises in a frequency range of 0,29GHz to 1,3GHz all transponders of the RF.C Hor-Lo frequency range from 10,7GHz to 11, 7GHz. Further the IF.C Ver-Wi signal also comprises in a frequency range of 1,3GHz to 2,34 GHz the transponders of the RF.C HorHi frequency range of 11,7GHz to 12,75GHz. Similar, Figure 5 also shows that the IF signal IF.C Ver-Wi comprises the transponders of both frequency ranges RF.C Ver-Lo and RF.C Ver-Hi in a similar downconverted intermediate frequency range of 0,29GHz to 2,34GHz. As shown in Figure 2, such a wideband LNB is thus able to provide wideband IF signals IF.C comprising all transponders of the RF.C signal to a corresponding group 12 comprising only two input connectors 10, for example by means of two coaxial cables.

It is clear that alternative embodiments are possible to that shown in Figures 1 to 6, in which one or more plurality of satellite dishes and corresponding LNBs for reception of respective RF satellite signals are provided. According to still further embodiments also the amount of universal LNBs and/or universal wideband LNBs could vary with respect to the embodiment shown. It is clear that for each of the universal LNBs coupled to the multiple dwelling channel stacking system 1, the IF signals will be provided to a corresponding group 12 of four input connectors 10 and for each of the universal wideband LNBs coupled to the multiple dwelling channel stacking system 1, the IF signals will be provided to a corresponding group 12 of two input connectors 10, for example by means of a corresponding number of suitable coaxial cables. It is clear that still further embodiments are possible in which one or more groups of one or more input connectors are connected to any suitable number of one or more groups of one or more IF signals provided by one or more, or any suitable combination of LNB, such as for example one or more single output LNBs and/or one or more multi output LNBS such as for example a dual output LNB, a twin output LNB, quad output LNB, an octo output LNB, a Quattro LNB, etc.

As further shown in Figures 1 and 2, the multiple dwelling channel stacking system 1 provides six CSS output connector signals 200 to the six dwellings 3. Each of the six CSS output connector signals 200 serves a respective group 300 of receivers 102 of the subscriber or user of the corresponding dwelling 3. As shown for example, CSS output connector signal 200.A provided by the multiple dwelling channel stacking system 1 serves a group 300.A comprising a plurality of receiver devices 102, referred to as IRD A.1, IRD A.2, etc. of a subscriber associated with the dwelling 3 referenced as DW.A. As shown in Figure 2, the CSS output connector signal 200.A is provided by the multiple dwelling channel stacking system 1 at a CSS output connector 20 referenced as 20.A. Each of the receiver devices IRD A.1, IRD A.2, etc. of the group 300.A of dwelling DW.A, is able to request a respective user band 110 of the CSS output connector signal 200.A. Each of the receiver devices IRD A.1, IRD A.2, etc. of the group 300.A of dwelling DW.A will also be able to provide transponder selection commands to the multiple dwelling channel stacking system 1, upon which the multiple dwelling channel stacking system 1 selects the desired transponder from the respective IF signals received at the input connectors 10 of the multiple dwelling channel stacking system 1. As shown in Figure 2, the plurality of input connectors 10 are connected to a CSS module 100. As explained above, the CSS module 100 in this way receives the plurality of downconverted IF satellite signals IF.A, IF.B, IF.C comprising a plurality of satellite transponders from the connected LNBs LNB.A, LNB.B and LNB.C. The CSS module 100 will in function of a transponder selection command issued by for example receiver device IRD A.1, select the desired transponder from these IF satellite signals received from the input connectors 10, and subsequently generate the user band 110 assigned to IRD A.1 for the CSS output connector signal 200.A. Such transponder selection commands generated by the receiver devices could for example be encoded according to a protocol based on Digital Satellite Equipment Control or DiSEqC. It is clear that alternative protocols are available such as for example FSK, which is for example used in the US, or any other suitable alternative protocol. With this protocol data signals and power can be transmitted and received over a coaxial cable without interfering with the IF satellite signals.

As further shown in Figures 1 and 2 a single CSS output connector signal 200.A provided at a single CSS output connector 20.A of the multiple dwelling channel stacking system 1 is able to serve a group 300.A comprising a plurality of receiver devices IRD A.1, IRD A.2, etc. Similar, as already explained above, the receiver devices 102 of this group 300.A are respectively associated with a particular user band 110 of the CSS output connector signal 200.A and can thus be connected to this CSS output connector 20.A by means of a single coaxial cable.

As shown in Figures 1 and 2, similar as explained above with respect to the group 300.A comprising a plurality of receiver devices 102 of dwelling DW.A, which are coupled to CSS output connector 20.A, also the group 300.B comprises a plurality of receiving devices 102 referenced as IRD B.1, IRD B.2, etc of the subscriber associated with dwelling DW.B. Similar as explained above output connector signal 200.B provided at CSS output connector 20.B will allow the receiving devices 102 of group 300B to receive a selected transponder 6 at a corresponding requested user band 110. Similar as explained above the CSS output connector signal 200.B can be distributed to the group 300.B of receiver devices 102 along a single coaxial cable.

As further shown in Figures 1 and 2, similarly as described above, also CSS output connector signals 200.C - 200.F at CSS output connectors 20.C - 20.F respectively provide selected transponders at a requested user band to a respective group 300.C - 300.F of one or more receiver devices 102. It is clear each group of 300 of receiver devices 102 can be coupled to the respective CSS output connector 20 by means of a single coaxial cable.

It is clear that alternative embodiments are possible in which the multiple dwelling channel stacking system comprises a different number of CSS output connectors 20, as long as in general the multiple dwelling channel stacking system 1 comprises a plurality of CSS output connectors 20. These plurality of CSS output connectors 20 being configured to provide a respective plurality of CSS output connector signals 200 to a respective plurality of connected groups 300 of receivers 102. Each receiver 102 of the group 300 of receivers 102 coupled to a particular CSS output connector 20 being configured to request a user band 110 of the CSS output connector signal 200 provided at this particular CSS output connector 20.

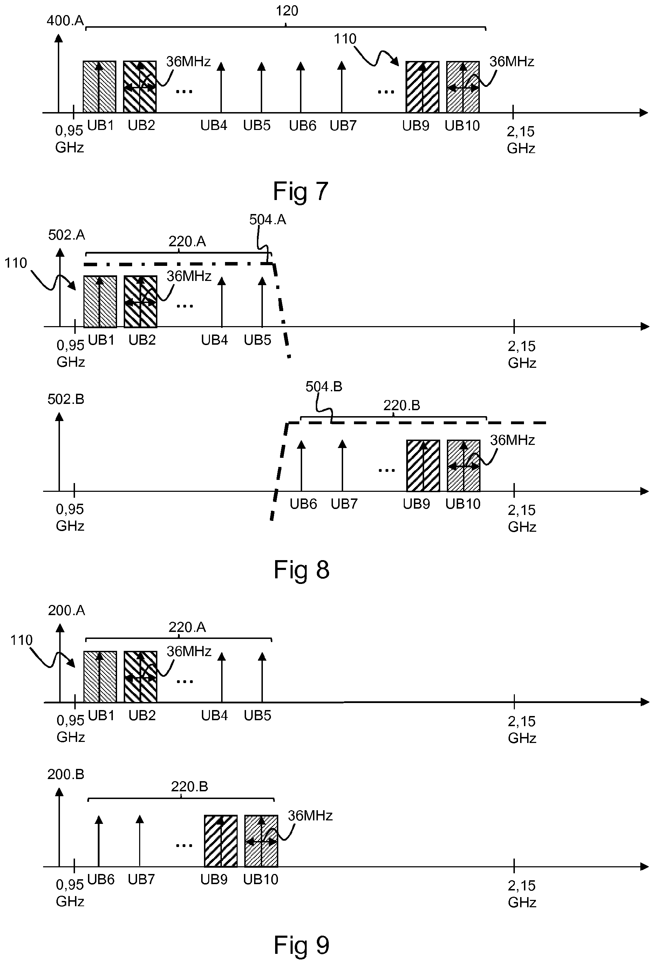

As shown in Figure 2, the CSS module 100, which is for example a dCSS module as mentioned above, comprises three CSS module outputs 140 referenced as 140.A, 140.B and 140.C. According to alternative embodiments the CSS module 100 could comprise a different number of CSS module outputs 140, as long as in general the CSS module 100 comprises one or more CSS module outputs 140. As shown in Figure 7 the CSS module 100 is configured to generate at the CSS module output 140.A a corresponding CSS module output signal 400.A. This CSS module output signal 400.A comprises according to the embodiment shown in Figure 7 a set 120 of ten user bands 110 referenced as UB1, UB2, ... , UB10. According to this particular embodiment the user bands comprise a bandwidth approximately the same as the transponders 6, for example 36MHz. The respective centre frequencies of the set 120 of adjacent user bands UB1, UB2, ... , UB10, according to this embodiment shown in Figure 7, are for example 1000MHZ, 1100MHz, 1200MHz, 1300MHz, 1400MHz, 1500MHz, 1600MHz, 1700MHz, 1800MHz and 1900MHz. However it is clear that according to alternative embodiments a different number and distribution of the user bands along the frequency spectrum of the CSS module output signal 400.A are possible, as long as in general the CSS module 100 is configured to generate a corresponding CSS module output signal 400.A comprising a set 120 of four or more adjacent user bands 110.

According to the embodiment shown in Figures 2, the CSS module 100 is for example a dCSS module capable to generate thirty or more user bands for distribution along its three CSS module outputs 140. According to such an embodiment the CSS module 100 will, similarly as explained above with reference to CSS module output 140.A, be configured to provide a corresponding CSS module output signal 400 comprising a further set 120 of ten further adjacent user bands 110. Similar as shown in Figure 7, the CSS module output 140.B could provide a corresponding CSS module output signal 400.B comprising a set 120 of ten adjacent user bands UB11, UB12, ... , UB20 respectively at the centre frequencies 1000MHZ, 1100MHz, 1200MHz, 1300MHz, 1400MHz, 1500MHz, 1600MHz, 1700MHz, 1800MHz and 1900MHz. Also similar as shown in Figure 7, the CSS module output 140.C could provide a corresponding CSS module output signal 400.C comprising a set 120 of ten adjacent user bands UB21, UB22, ... , UB30 respectively at the centre frequencies 1000MHZ, 1100MHz, 1200MHz, 1300MHz, 1400MHz, 1500MHz, 1600MHz, 1700MHz, 1800MHz and 1900MHz. It is clear that alternative embodiments are possible, as long as in in general the CSS module 100 is configured to generate for each CSS module output 140 a corresponding CSS module output signal 400 comprising a set 120 of four or more adjacent user bands 110.

As further shown in Figure 2, according to this embodiment, the multiple dwelling channel stacking system 1 comprises three CSS output interfaces 500, respectively coupled to the three CSS module outputs 140 of the CSS module 100. As further shown these CSS output interfaces respectively couple one CSS module output 140 to a corresponding CSS output connector subset 22 comprising two corresponding CSS output connectors 20. As shown in Figure 2, according to this embodiment, CSS output interface 500.A couples CSS module output 140.A to CSS output connector subset 22.A comprising two CSS output connectors 20.A and 20.B. Similarly CSS output interface 500.B couples CSS module output 140.B to CSS output connector subset 22.B comprising two CSS output connectors 20.C and 20.D. Also similarly CSS output interface 500.C couples CSS module output 140.C to CSS output connector subset 22.C comprising two CSS output connectors 20.E and 20.F. It is clear that alternative embodiments are possible, as long as in general, the multiple dwelling channel stacking system 1 comprises at least one CSS output interface 500 configured to respectively couple one CSS module output 140 to a corresponding CSS output connector subset 22 comprising two or more corresponding CSS output connectors 20. In this way the number of CSS output connectors 20 of the multiple dwelling channel stacking system 1 is thus a multiple of the number of CSS module outputs 140 available from the CSS module 100.

According to the preferred embodiment of Figure 2, the output interface 500.A will generate two interface output signals 502.A and 502.B from the received CSS module output signal 400.A. As shown in Figure 8, the first interface output signal 500.A comprises the five adjacent user bands UB1 to UB5, which are a subset 220.A of the set 120 of adjacent user bands UB1 to UB10 of the CSS module output signal 400.A of Figure 7. As schematically shown in Figure 8, according to this embodiment the output interface 500.A accomplishes this by applying a filter with the schematically represented filter profile 504.A, for example comprising a cut-off frequency between UB5 and UB6, for example at 1,45GHz. It is clear that alternative embodiments are possible, as long as in general the output interface 500.A filters the CSS module output signal 400.A such that the interface output signal 502.A comprises a subset 220.A comprising two or more user bands 110. It is clear that embodiments in which the subset 220 comprises a plurality of adjacent user bands 110 of the set 120 of adjacent user bands 110 of the CSS module output signal 400 are preferable as this simplifies the corresponding design for the filter profile 504 applied by the output interface 500, as for example shown in the embodiment of Figures 7 and 8. As further shown in Figure 8, similarly as explained above with reference to the interface output signal 502.A, the output interface 500.A generates a further interface output signal 502.B which comprises a further subset 220.B comprising the five further user bands UB6 to UB10 of the set 120 of adjacent user bands UB1 to UB10 of the CSS module output signal 400.A of Figure 7. As schematically shown in Figure 8, according to this embodiment this is accomplished by the output interface 500.A by applying a filter with schematically represented filter profile 504.B, which for example also comprises a cut-off frequency in between UB5 and UB6, for example at 1,45 GHz. It is clear that alternative embodiments are possible, as long as in general the output interface 500.A filters the CSS module output signal 400.A such that the interface output signal 502.B comprises a subset 220.B comprising two or more user bands 110 which are not present in the subset 220.A. It is clear that embodiments in which the subset 220 comprises a plurality of adjacent user bands 110 of the set 120 of adjacent user bands 110 of the CSS module output signal 400 are preferable as this simplifies the corresponding design for the filter profile 504 applied by the output interface 500, as for example shown in the embodiment of Figures 7 and 8. As shown in Figure 2, each of the interface outputs providing the respective interface output signals 502.A and 502.B of the output interface 500.A is respectively coupled to a corresponding CSS output connector 20.A and 20.B. It is clear that in this way the output interface 500.A is coupled to the two CSS output connectors 20.A and 20.B of the CSS output connector subset 22.A. It is clear that alternative embodiments are possible, for example comprising a CSS output connector subset 22.A comprising three or more CSS output connectors, or in which the output interface 500 assigns a different distribution of subsets of adjacent user bands to the respectively coupled output connectors, as long as in general the output interface 500.A is configured to respectively filter the CSS module output signal 400.A, such that each of the CSS output connector signals 200.A, 200.B of the CSS output connectors 20.A, 20.B of the corresponding CSS output connector subset 22.A only comprises a corresponding subset 220.A, 220.B of two or more adjacent user bands 110.

As shown in Figure 2, the first CSS output connector 20.A is coupled to the CSS output interface 500.A without frequency translation, while the further CSS output connector 20.B of this CSS output connector subset 22.A is coupled to the CSS output interface 500.A via a frequency translation module 510.A. As shown, according to this embodiment, the frequency translation module 510 shifts the centre frequencies of the interface output signal 502.B downwards by 0,5 GHz such that the centre frequencies of UB6 to UB10, which are respectively 1500MHz, 1600MHz, 1700MHz, 1800MHz and 1900MHz are shifted to 1000MHZ, 1100MHz, 1200MHz, 1300MHz, 1400MHz. As clearly shown in Figure 9, in this way the output interface 500 and the frequency translation module 510 cooperate to provide at both CSS output connectors 20.A and 20.B of the CSS output connector subset 22.A, which is coupled to the CSS module output 140.A via the output interface 500.A, corresponding CSS output connector signal 200.A and 200.B, each comprising a corresponding subset 220.A and 220.B of five user bands UB1 to UB5 and UB6 to UB10 of which the centre frequencies respectively match. This means that the CSS output connector signal 200.B of the further CSS output connector 20.B comprises UB6 to UB10 at centre frequencies of respectively 1000MHZ, 1100MHz, 1200MHz, 1300MHz, 1400MHz, which match the centre frequencies of the of the user bands UB1 to UB5 of the CSS output connector signal 200.A of the first CSS output connector 20.A of the output connector subset 22.A.

According to the embodiment shown in Figure 2, the further output interfaces 500.B and 500.C which couple the CSS module output 140.B and 140.C respectively to their corresponding first CSS output connector 20.C and 20.E without frequency translation and to their corresponding further CSS output connector 20.D and 20.F via a respective frequency translation module 510, generally operate in a similar way as described above respectively for UB11 to UB20 and UB21 to UB30. It is clear that according to this embodiment the multiple dwelling channel stacking system 1 is able to provide for six CSS output connector signals 200 at six corresponding CSS output connectors 20 which each comprise a subset 220 of five adjacent user bands 110 of which the centre frequencies match. This means, according to this embodiment that the centre frequencies of the five adjacent user bands of each CSS output connector signal 200 are respectively 1000MHZ, 1100MHz, 1200MHz, 1300MHz and 1400MHz. It is clear that alternative embodiments are possible as long as in general the multiple dwelling channel stacking system 1 comprises at least one CSS output interface 500 configured to respectively couple one CSS module output 140 to a corresponding CSS output connector subset 22 comprising two or more corresponding CSS output connectors 20, such that each of the corresponding CSS output connector signals 200 comprises a respective subset 220 comprising two or more user bands 110 of the corresponding CSS module output signal 400 of this CSS module output 140. Whereby this corresponding CSS output connector subset 22 comprises a first CSS output connector 20.A, and the CSS output interface 500 is coupled to this first CSS output connector 20.A without frequency translation. And whereby this corresponding CSS output connector subset 22 also comprises at least one further CSS output connector 20.B. The CSS output interface 500 being coupled to this at least one further CSS output connector 20.B via a respective frequency translation module 510. This frequency translation module 510 is configured to frequency translate the corresponding subset 220.B of the user bands 110 for the CSS output connector signal 200.B for this further CSS output connector 20.B. Preferably this frequency translation functions to frequency translate this corresponding subset 220.B, such that the centre frequencies of its user bands 110 match the centre frequencies of the user bands 110 of the subset 220.A of the first CSS output connector signals 200A for the first CSS output connector 20.A.

It is clear that in this way the output interface 500 couples one CSS module output 140.A to a corresponding CSS output connector subset 22.A comprising two or more corresponding CSS output connectors 20. As described in more detail above the output interface 500 provides this coupling in such a way that each of the corresponding CSS output connector signals 200 comprises a respective subset 220 comprising two or more adjacent user bands 110 of the corresponding CSS module output signal 400. According to alternative embodiments the frequency translation module 510 could be comprised within the output interface 500.

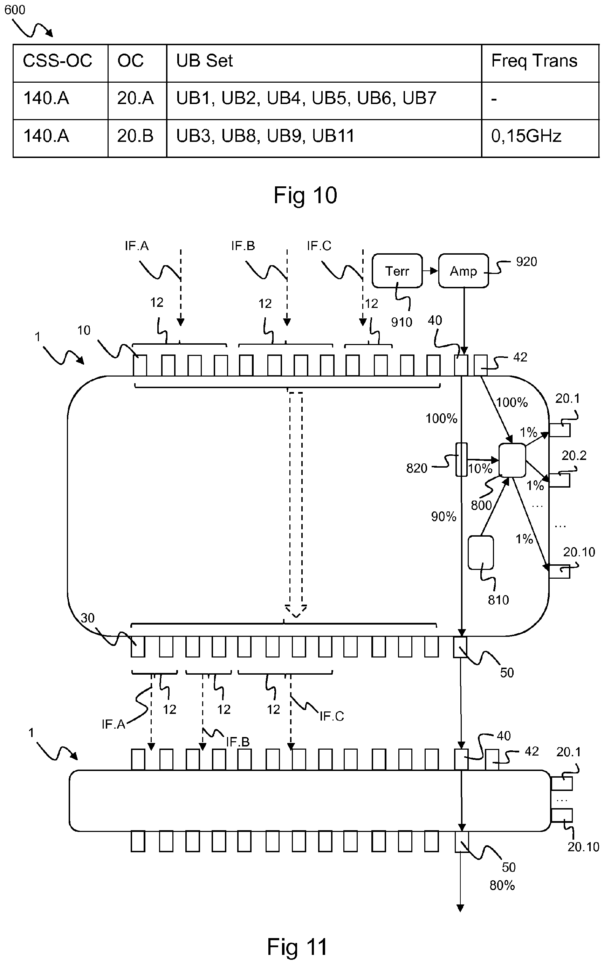

According to advantageous embodiments, similar to that described with reference to Figure 2, preferably each of the subsets 220 comprises an identical number of adjacent user bands 110 as this leads to a particularly simple and efficient setup for providing a fair distribution of the user bands to each of the CSS output connectors 20 of a multiple dwelling channel stacking system 1. Still further, according to advantageous embodiments, similar to the embodiment described with reference to Figure 2, preferably the centre frequencies of the adjacent user bands of the subsets 220 of each of the one or more respective first CSS output connectors 20.A, 20.B and 20.D match. It is clear that in this way at each of the CSS output connects 20 there will be provided not only an identical number of user bands, but they will also be provided at the same centre frequencies, which leads to a particular simple and efficient implementation that not only provides for a fair distribution of the user bands, but also provides an identical frequency spectrum at each of the CSS output connectors of the multiple dwelling channel stacking system 1. However it is clear, as will be explained in more detail below with reference to Figure 10 that alternative embodiments are possible.

In order to ensure the fair distribution of user bands and allow for the same frequency spectrum at the CSS output connectors in an efficient and reliable way preferably the multiple dwelling channel stacking system comprises five or less, for example three or less, CSS module outputs 140 and respectively two or more CSS output connectors 20 coupled to each CSS module output 140 via the CSS output interface 500. This also allows the CSS module 100 to make use of existing chipsets, such as for example the dCSS modules mentioned above, which are developed for Single Family Unit systems without the need for designing a dedicated chipset for a multiple dwelling unit.

Preferably, as shown in Figure 2, the CSS module 100 comprises a user band correlation module 600. This user band correlation module 600 comprises a predetermined correlation between each CSS module output 140, which is represented as column "CSS-OC" in the embodiment of Figure 3, and a corresponding set 120 of four or more user bands 110. In the embodiment of Figure 3 this represented in column "UB set", and as shown there are for example two lines correlated to CSS module output 140.A, namely UB1-UB5 and UB6 - UB10, thereby providing a correlation between CSS module output 140.A and the set 120 of adjacent user bands UB1 to UB10 as explained in more detail above with reference to embodiment of Figures 1 and 2. Similarly the embodiment of Figure 3 defines a correlation between CSS module output 140.B and the set of adjacent user bands UB11 to UB20, and a correlation between CSS module output 140.C and the set of adjacent user bands UB21 to UB30. Additionally the user band correlation module 600 also comprises a correlation, respectively for each CSS module output 140, between each CSS output connector 20 of its CSS output connector subset 22 and a corresponding subset 220 comprising two or more user bands 110 of the set 120 of four or more user bands 110 of the CSS module output 140. According to the embodiment shown in Figure 3, this correlation is defined for both CSS output connectors 20.A and 20.B of the CSS output connector subset 22.A of CSS module output 140.A, by means of the entries in the column "OC" and the corresponding entries in the column "UB set". As shown in Figure 3, this allows, in a simple and efficient way, to define a correlation between CSS output connector 20.A and the corresponding subset 220 of user bands UB1-UB5 and a further correlation between CSS output connector 20.B and the corresponding subset 220 of user bands UB6-UB10. It is clear that still further embodiments than that of the lookup table of Figure 3 are possible for the user band correlation module 600, as long as in general both correlations as mentioned above are provided for. It is further clear that this also allows for alternative embodiments, in which no filtering is applied by the CSS output interface 500 to the set 120 of user bands of the CSS module output signal 140. In such embodiments each of the CSS output interface output signals will comprise in addition to the corresponding subset 220 of user bands 110 correlated to its corresponding CSS output connector, also further user bands of the set 120 of the CSS module output signal 140. Also these further user bands of the set 120 will be available to the respective output connector 20. The first output connector 20 of the group 22 will receive its subset and any further user bands without frequency translation. The one or more further output connectors of the group will receive their corresponding subset and any further user bands after frequency translation is applied by means of the frequency translation module 510. As explained above, the user band correlation module 600 will then ensure that the control signals received at the respective CSS output connector 22 of a group 22 will limit control signals, for example for channel selection and/or user band assignment, to the user bands correlated with this particular output connector.

As further shown in Figure 3, according to this embodiment the user band correlation module 600 further comprises also a correlation between the respective CSS output connector and the frequency translation applied by the respective frequency translation module 510. As shown, for each of the further CSS output connectors 20.B, 20.D and 20.F of the embodiment of Figure 2, the applied frequency translation of 0,5GHz to the subset 220 of adjacent user bands mentioned in column "UB set" is mentioned in the corresponding row of column "Freq Trans". This allows for example the user band correlation module 600 to provide for a suitable setting for operation of the frequency translation module 510, for example under control of the CSS module 100 and/or the CSS output interface 500. This is also advantageous, as in this way the CSS module 100 is aware of the frequency translation to which this particular subset of adjacent user bands of a respective CSS module output signal 400 is subjected. This is particularly advantageous when handling for example control signals respectively received from each the CSS output connectors of a CSS output connector subset coupled to a particular CSS module output 140 of the CSS module 100. As shown in the embodiment of Figure 2 preferably such control signals, which are shown in striped lines are respectively fed to a separate control signal input 610A and 610B of the CSS module 100, one for each CSS output connector 20.A and 20.B. Such control signals could for example be transponder selection commands generated by the receiver devices, for example encoded according to a protocol based on Digital Satellite Equipment Control or DiSEqC. In this way the CSS module 100, even when a plurality of CSS output connectors 20 is coupled to a single CSS module output 140 by means of the output interface, can easily determine from which particular CSS output connector 20 the control signal was received. This then allows, for example by means of the user band correlation module 600, to determine in an efficient and robust way which particular user band or subset of user bands the control signal refers to. It also enables to ensure that each output connector signal is not assigned more than its correlated number of user bands and in this way allows for a robust and efficient distribution of the overall number of user bands in a multiple dwelling context. It also ensures that receiver devices cannot perform control operations on user bands assigned to another CSS output connector than the one the receiver device is connected to.

It is clear that still further alternative embodiments are possible than those described above with reference to Figures 1 to 9. These will be explained with reference to Figure 10, which shows an alternative lookup table, similar to that of the embodiment of Figure 3, for use by user band correlation module 600. As shown there is defined a correlation between the CSS module output 140.A and a set 120 user bands UB1-UB9 and UB11 for the module output signal 400. It is thus not required that all user bands of the set 120 for the respective module output signal 400 are adjacent and or distributed along the frequency domain in a uniform or equidistant way, as long as in general the CSS module 100 is configured to generate for each CSS module output 140 a corresponding CSS module output signal 400 comprising a set 120 of four or more user bands 110. As further shown in the embodiment of Figure 10 there is defined a correlation between the first CSS output connector 20.A and the further CSS output connector 20.B of the CSS output connector subset 22.A. The first CSS output connector 20.A is correlated to the subset 220.A of user bands UB1, UB2, UB4, UB5, UB6 and UB7. The further CSS output connector 20.B is correlated to the subset 220.B of user bands UB3, UB8, UB9, UB11. It is thus clear that in general the number of user bands of both subsets 220.A and 220.B does not need to be identical and that all user bands of each subset 220.A do not need to be adjacent and/or distributed along a frequency domain in a uniform or equidistant way, as long as in general at least one CSS output interface 500 is configured to respectively couple one CSS module output 140 to a corresponding CSS output connector subset 22 comprising two or more corresponding CSS output connectors 20, such that each of the corresponding CSS output connector signals 200 comprises a respective subset 220 comprising two or more user bands 110 of the corresponding CSS module output signal 400.

UB1 - UB9 and UB11 of the CSS module output signal 400.A of the CSS module output 140.A, could for example be arranged similarly as mentioned above, at the respective centre frequencies of 1000MHZ, 1100MHz, 1200MHz, 1300MHz, 1400MHz, 1500MHz, 1600MHz, 1700MHz, 1800MHz and 2000MHz. The subset 220.A which will be provided without frequency translation to the first CSS output connector 20.A as the CSS output connector signal 200.A will thus comprise corresponding centre frequencies 1000MHZ, 1100MHz, 1300MHz, 1400MHz, 1500MHz, 1600MHz. The CSS output interface 500.A output signal 510.B will comprise a subset 200.B of user bands comprising centre frequencies of 1200MHz, 1700MHz, 1800MHz and 2000MHz. According to the embodiment of Figure 10 the subset 200.B of userbands will be frequency translated with 0,15GHz. This will result in a CSS output connector signal 200.B for the further CSS output connector 20.B with a frequency translated corresponding subset 220.B of 1050MHZ, 1550MHz, 1650MHz and 1850MHz. Although as described above with reference to Figure 3, it is preferred that the respective centre frequencies of the adjacent user bands of the subsets 220 of each of the one or more respective first CSS output connectors 20.A match, this means in case of an identical number of user bands that all user bands match or in case of non-identical number of user bands the user bands of the smallest subset match with a corresponding number of user bands of the largest subset, it is clear that alternative embodiments are possible, as long as in general the CSS output interface 500 is coupled to at least one further CSS output connector 20.B via a respective frequency translation module 510, which is configured to frequency translate the corresponding subset 220.B of adjacent user bands 110. Although it is preferred to operate the frequency translation module such that the frequency range of the subset 220.B of user bands 110 of the respective corresponding further CSS output connector 20.B matches the frequency range of the subset 220.A at the first CSS output connector 20.A, according to the embodiment of Figure 10, in general it can also be advantageous when the rate of overlap of these frequency ranges is increased by means of the frequency translation module 510. Although it is preferred to operate the frequency translation module 510 such that the frequency ranges of the frequency translated subset 220.B at the CSS output connector 20.B and the subset 220.A at the CSS output connector 20.A overlap completely, such as for example shown in Figure 9, it is clear from the embodiment of Figure 10 that it could already be advantageous when these frequency ranges at least partially overlap. It is clear that still further embodiments are possible in which the frequency translation results in a reversal of the sequence of the user bands in a subset 220. For example, when in the example described above the subset 200.B of user bands comprising centre frequencies of 1200MHz, 1700MHz, 1800MHz and 2000MHz would be frequency translated with 2900MHz, this would result in a frequency translated subset 220 of user bands with respective centre frequencies 1700MHz, 1200MHz, 1100MHz and 900MHz.

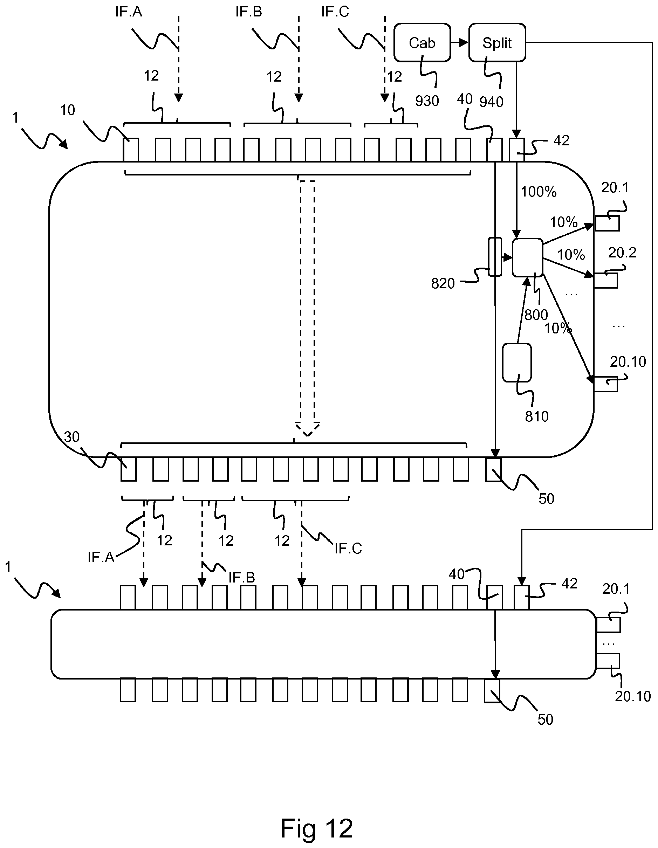

It is clear that still further embodiments of the multiple dwelling channel stacking system 1 are possible. According to such embodiments the multiple dwelling channel stacking system 1 further comprises also a plurality of cascade output connectors 30. These cascade output connectors 30 are respectively coupled to the plurality of input connectors 10 of this multiple dwelling channel stacking system1. The cascade output connectors 30 function is to cascade the plurality of downconverted IF satellite signals to a further multiple dwelling channel stacking system 1, thereby still further increasing scalability in a multiple dwelling context. This is realised, as shown in Figures 11 and 12, by connecting these cascade output connectors 30, for example by means of suitable coaxial cables to corresponding input connectors 10 of a subsequent multiple dwelling channel stacking system 1. An embodiment comprising such cascade output connectors 30 are for example schematically shown in Figures 11 and 12. The other elements of the multiple dwelling channel stacking system 1 could in general be similar as described above and are not explicitly repeated in the drawings and this description for the sake of brevity. As shown the embodiment of Figures 11 and 12 comprises ten CSS output connectors 20, referenced as 20.1 to 20.10. Similar as described above these CSS output connectors 20 can each be provided with a suitable CSS output connector signal 200 by a CSS module 100. The CSS output connector signal 200 provided by such a CSS module 100 to the CSS output connectors, similar as described above, comprises a plurality of user bands with respective centre frequencies that are in a similar range as the downconverted IF satellite signals. As for example shown in Figures 9, according to the embodiment shown, the centre frequencies of the user bands 110 are in an intermediate frequency range which is higher than 0,95GHz, for example 0,95GHz to 2,15 GHZ. However it is clear that alternative intermediate frequency ranges for the user bands could be used, such as for example 0,3 GHz to 3GHz or any other suitable intermediate frequency range for the user bands.

As shown in the embodiment of Figures 11 and 12, in addition to the intermediate frequency satellite signals IF.A, IF.B, IF.C , received at input connectors 10, the multiple dwelling channel stacking system 1 further can also receives a signal from a terrestrial broadcasting service at a terrestrial input connector 40. The multiple dwelling channel stacking system 1 further can also comprises a cable input connector 42 for receiving an input signal from a cable distribution network. Although in the embodiment described below reference will be made to the terrestrial broadcasting service and cable distribution network respectively, it is clear that alternative embodiments are possible, as long as in general multiple dwelling channel stacking system 1 comprises such a first input connector 40 configured to receive a first input signal from a first distribution network and such a second input connector 42 configured to receive a second input signal from a second distribution network. The frequency range of the incoming signal 910 of such a terrestrial broadcasting service, which is for example captured by means of a suitable antenna, as shown in Figure 11 is below the frequency range of the intermediate frequency satellite signals, for example below 0,9GHz, for example in the range of 47MHz to 862MHz. The multiple dwelling channel stacking system 1, as will be described in more detail below is thus able to distribute this terrestrial input connector signal, received at the terrestrial input connector 40 to each of its CSS output connectors 20.1, for further distribution together with the respective CSS output connector signal 200 generated by the CSS module 100. It is clear this is possible because the frequency ranges of the terrestrial input connector signal and the CSS output connector signal 200 generated by the CSS module 100 do not overlap. Similarly as explained above, with reference to the terrestrial input signal 910, alternatively a cable input signal 930 originating from for example a cable television distribution network or a network of a cable distribution internet service provider, such as for example shown in the embodiment of Figure 12, operates in a frequency range below the frequency range of the intermediate frequency satellite signals, for example below 0,9GHZ, for example in the range of 40MHz to 900MHz. Similarly as explained above, this cable input signal 930, when received at the cable input connector 42 can be distributed by the multiple dwelling channel stacking system 1 to the CSS output connectors 20 along with the CSS output connector signals 200 provided by the CSS module 100 as their frequency ranges do not overlap. It is clear that alternative nonoverlapping frequency ranges are possible for the frequency range of the terrestrial or cable input signals and respectively the frequency range of the CSS output connector signals 200 comprising the user bands originating from the satellite distribution network. For example the frequency range of the cable or terrestrial input signals could for example be lower than 1002MHz or lower than 1218MHz; and the frequency range for the centre frequencies of the user bands of the CSS connector output signal 200 could for example be respectively higher than 1002MHz or higher than 1218MHz.

Figures 11 and 12 show an embodiment of the multiple dwelling channel stacking system 1 comprising a terrestrial input connector 40 suitable for receiving input signals from a terrestrial broadcast service or the like and a cable input connector 42 suitable for receiving input signals from a cable distribution network or the like. Figure 11 shows this embodiment of the multiple dwelling channel stacking system 1 according to a first mode of operation wherein the terrestrial input connector 40 receives an input signal 910 from a terrestrial distribution network. Figure 12 shows this embodiment of the multiple dwelling channel stacking system 1 according to a second mode of operation wherein alternatively the cable input connector 42 receives an input signal 930 from a cable distribution network.

As further shown in Figures 11 and 12, the multiple dwelling channel stacking system 1, next to the cascade output connectors 30 for cascading the IF satellite signals to a further multiple dwelling channel stacking system 1, as schematically shown, also comprises a terrestrial cascade output connector 50. This terrestrial cascade output connector 50 functions to cascade the input signal 910 received at the terrestrial input connector 40 from the terrestrial distribution network to a further multiple dwelling channel stacking system 1. The embodiment of the multiple dwelling channel stacking system 1, as shown, further also comprises a distribution module 800 and a distribution module configurator 810 coupled to this distribution module 800.

The distribution module configurator 810 provides a signal to the distribution module 800 indicative of whether the input signal originates respectively from the terrestrial input connector 40 or the cable input connector 42. According to a particularly simple embodiment the distribution module configurator 810 could comprise a suitable manual switch comprising a plurality of selectable states for manually selecting whether the input signal originates from a terrestrial broadcasting service connected provided to the terrestrial input connector 40 or alternatively whether the input signal originates from a cable distribution network provided to the cable input connector 42. It is clear that alternative embodiments are possible, in which for example the distribution module configurator 810 is able to automatically determine if the input signal is received from the terrestrial input connector 40 or the cable input connector 42, and/or whether it relates to a signal received from a terrestrial broadcasting service, or whether it relates to a signal from a cable distribution network of for example a cable television provider or a cable internet service provider. The terrestrial distribution network could for example be a Digital Video Broadcasting or DVB terrestrial broadcasting service, such as for example DVB-T or DVB-T2. The cable distribution network could for example DVB-C, which stands for "Digital Video Broadcasting - Cable, or DVB-C2.

As shown terrestrial input connector 40 is coupled to the terrestrial cascade output connector 50. By means of a branch module 820 a share of the signal power of the input signal of the first input connector 40 is provided to the distribution module 800. As shown, also the cable input connector 42 is coupled to the distribution module 800. It is clear that in this way the distribution module 800 is coupled to the terrestrial input connector 40 for receiving a share of the signal power of the terrestrial input signal of which another share is also cascaded to the terrestrial cascade output connector 50, and alternatively coupled to the cable input connector 42 for receiving a cable input signal from the cable input connector 42. As further shown, the distribution module 800 is further also coupled to the plurality of CSS output connectors 20 for distributing the received terrestrial input signal or cable input signal to the plurality of CSS output connectors 20.

As shown in Figure 11, in the first mode of operation, the branch module 820 is configured to extract 10% of the signal power of the input signal received at the branch module 820. This means that 10% from the signal power of the input signal which arrives at the branch module 820 is extracted from the coupling between terrestrial input connector 40 and the terrestrial cascade output connector 50. This then allows the distribution module 800 to distribute respectively 1% of the signal power of the terrestrial input signal received at the terrestrial input connector 40 to each of the ten CSS output connectors 20. As shown, 90% of the signal power of this input signal is not extracted by the branch module 820 from this coupling and serves to distribute a sufficiently large share of the available signal power to the terrestrial cascade output connector 50. In this way a large enough share of the power of the input signal received from the terrestrial input connector 40 at the branch module 820 is not extracted and is distributed from the branch module 820 towards the corresponding terrestrial cascade output connector 50 in order to allow for subsequent cascading of to a further terrestrial input connector 40 of a further multiple dwelling channel stacking system 1 as shown, without the need for intermediate amplification. In this way a cascade comprising a cascaded chain of a plurality of such multiple dwelling channel stacking systems 1 with a reduced need for intermediate amplification. In this way for example five to ten cascaded multiple dwelling channel stacking systems 1 can provide for a high level of scalability while providing for a simple set up and a minimal amount of cabling to be used to enable distribution of the terrestrial input signal in a multiple dwelling context. As shown in the embodiment of Figure 11, such a distribution ratio is possible as the input signals 910 from a terrestrial broadcasting service, for example a terrestrial television broadcasting service, received by means of suitable antenna, can be subjected to a suitable amplification, for example by means of a suitable amplifier 920 which is coupled upstream of the terrestrial input connector 40 of the first multiple dwelling channel stacking system 1 of the cascaded set. Such initial amplification of such terrestrial input signals 910 is possible as the terrestrial broadcast services are unidirectional, which means that only reception of the terrestrial input signal 910 is to be provided for, without the need for any broadcast functionality, a control channel, an upload channel, etc. from the receiver devices connected to the CSS output connectors 20 via the multiple dwelling channel stacking system 1 back to the terrestrial distribution network.

As shown in Figure 12, when alternatively there is provided an input signal 930 coupled to cable input connector 42 originates from a cable distribution network, there is often the need to provide for broadcast functionality, a control channel, an upload channel etc. from the receiver devices connected to the CSS output connectors 20 via the multiple dwelling channel stacking system 1 back to the cable distribution network. In such a context an initial amplification of the cable input signal 930 is complex as this interferes with the need to provide for example such an upload channel for the services provided by a cable internet service provider. As shown in Figure 12 preferably, the cable input signal 930 is distributed to each respective cable input connector 42 of the respective cascaded multiple dwelling channel stacking systems 1 in parallel, for example by means of a suitable signal splitting module 940. As further shown, preferably the cable input connector 42 is not coupled to a corresponding cascade output connector. Although this results in the use of more cables for the distribution of the cable input signal 930 along the cascaded multiple dwelling channel stacking systems 1, the signal power loss resulting at each stage from a cascaded setup would lead to unacceptable low levels of signal power at the respective cable input connectors 42 of the most downstream cascaded systems without the possibility to apply intermediate amplification in a simple way because of for example the need for an upload channel. As shown in the embodiment of Figure 12 the distribution module 800 will receive all signal power from the input signal at the cable input connector 42. As further shown in Figure 12, the distribution module configurator 810 will then selectively operate the distribution module 800 according a second mode of operation. As shown in this second mode of operation the signal power of the input signal is distributed entirely by the distribution module 800 to the plurality of CSS output connectors 20. As shown in this embodiment the distribution module 800 distributes respectively 10% of the signal power of the cable input signal received from the cable input connector 42 at the distribution module 800 to each of the ten CSS output connectors 20. It is clear that according to this embodiment no signal power of this cable input signal is wasted to a cascade output connector. In this way a maximum amount of the signal power of the unamplified cable input signal received from the cable input connector 42 at the distribution module 800 is distributed to the CSS output connectors 20, while no signal power is wasted to a corresponding cascade output connector, which in such a context is not used.

It is clear that alternative embodiments to that of Figures 11 and 12 are possible, as long as in general the distribution module 800 configured to operate according to a first mode of operation when the signal from the distribution module configurator 810 indicates that the input signal 910 originates from the first input connector 40. In this first mode of operation the first input connector 40 is coupled to a first cascade output connector 50 and a branch module 820 provides a share of the signal power of the input signal of the first input connector 40 to the distribution module 800. The distribution module 800 then distributes this received input signal such that the share of the signal power of this input signal received at the first cascade output connector 50 is larger than the share of the signal power of the input signal provided to the distribution module 800 by the branch module 820 for distribution to the plurality of CSS output connectors 20. Additionally in general the distribution module 800 is also configured to operate according to a second mode of operation when the signal from the distribution module configurator 810 indicates that the input signal originates from the second input connector 42. In this second mode of operation the distribution module 800 will distribute the signal power of this input signal entirely to the plurality of CSS output connectors 20.

Even still further alternative embodiments to that of Figures 11 and 12 are possible, for example an alternative embodiment, which mainly differs from Figures 11 and 12 in that the multiple dwelling channel stacking system 1 does not comprise a distribution module configurator 810. According to such an alternative embodiment in the first mode of operation the input signal from the first distribution network is simply provided to the first input connector 40, which provides it to the first cascade output connector 50 via the branch module 820. This branch module 820 then provides a share of the signal power of this input signal to the distribution module 800, which further distributes it to the CSS output connectors. In the second mode of operation, the input signal from the second distribution network is alternatively provided to the second input connector 42 which provides it to the distribution module 800 directly for distribution to the CSS output connectors. The selection for the distribution module 800 of its first mode of operation when the signal originates from a first distribution network, or alternatively its second mode of operation when the signal originates form a second distribution network, according to this embodiment, is thus performed in a simple way by respectively providing the input signal to the first input connector 40, or alternatively to the second input connector 42, without the need for a distribution module configurator 810. According to such an embodiment the first input connector 40 is permanently coupled to the first cascade output connector 50. The branch module 820 is arranged in the signal path of the first input signal from the first input connector 40 to the first cascade output connector 50. This branch module 820, similarly as described above is coupled to the distribution module 800 to provide a share of the signal power of this first input signal to the distribution module 800 for further distribution to the CSS output connectors 20. According to such an embodiment the second input connector 42 is permanently coupled to the distribution module 800. In this way, in the second mode of operation, the distribution module 800 receives the second input signal from the second distribution network directly from the second input connector 42. It is clear that, similar as shown in Figures 11 and 12, the second input connector 42 is not coupled to a cascade output connector.

Preferably in the first mode of operation, the share of the signal power of the input signal extracted by the branch module 820 from the coupling between the first input connector 40 and the first cascade output connector 50 is smaller than 25%, preferably smaller than 15%. In this way as the branch module 820 extracts only a sufficiently small amount of the signal power of the input signal, a sufficiently large amount of this input signal can be further distributed to the first cascade output connector 50. It is clear that, when a sufficiently high share of the signal power of the input signal reaches the first cascade output connector 50, this allows for a sufficiently high number of cascaded multiple dwelling channel stacking systems 1 without the need for intermediate amplification of this input signal. Preferably, in this first mode of operation, the branch module 820 and/or the distribution module 800 also provide the option of selectively providing signal amplifiers in the signal path to the plurality of CSS output connectors 20. This could for example be realised by suitable amplifiers, which can be selectively bypassed. The selective setting of such functionality could for example be provided by means of the distribution module configurator 810, which could for example comprise a switch with different states in function of whether the selective amplification should be enabled or disabled in this first mode of operation.

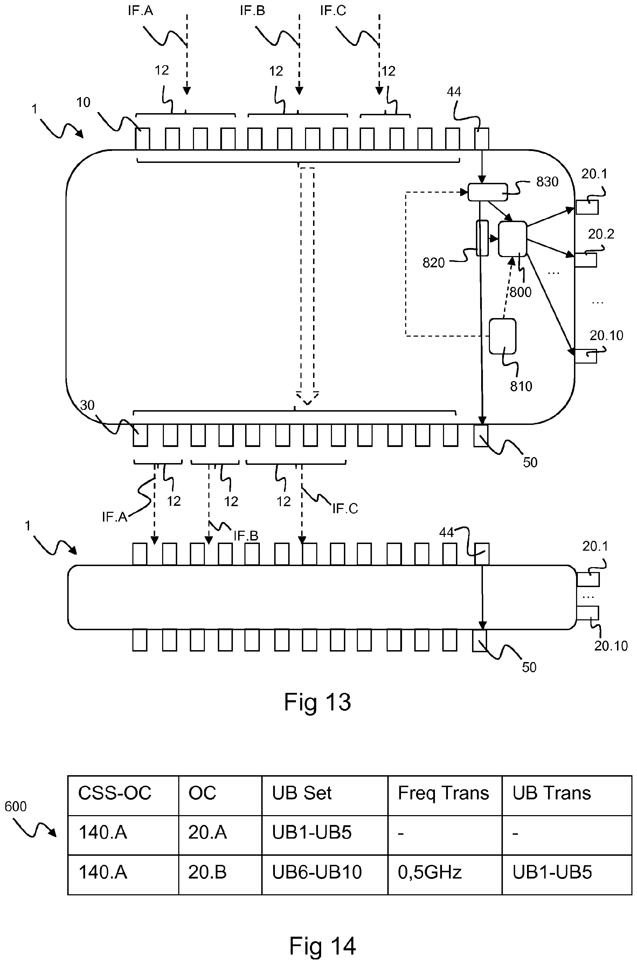

According to a preferred embodiment it is also advantageous when the distribution module 800 selectively disconnects the second input signal from the second input connector 42, when operated according to the first mode of operation, and vice versa, the distribution module 800 selectively disconnect the first input signal from the first input connector 40, when operated according to the second mode of operation. This could for example be realised by means of a change over switch which is controlled in function of the signals provided by the distribution module configurator 810 to toggle between a coupling with the first input connector 40 and alternatively the second input connector 42. It is also clear that although preferably, as shown in the embodiments of Figures 11 and 12, the distribution module 800 distributes the received signal power of the input signal evenly amongst the plurality of CSS output connectors 20, alternative arrangements different amounts for the share of the signal power and distribution of the share of the signal power amongst the plurality of CSS output connectors 20 are possible. As shown in Figure 13, such a change over switch 830 controlled by the distribution module configurator could also enable an embodiment in which only a single input connector 44 is needed to alternatively serve as first input connector for a first input signal from a first distribution network and second input connector for a second input signal from second distribution network as explained above. In a first mode of operation the change over switch 830 is then selectively operated by the distribution module configurator 810 to couple the single input connector 44 to the branch module 820, so that the first input signal received at the single input connector 44 is then provided via the branch module 820 to the distribution module 800 and the first cascade output connector 50. In the second mode of operation the distribution module configurator 810 will then instruct the change over switch 830 to disconnect the single input connector 44 from the branch module 820 and the first cascade output connector 50. In this second mode of operation the change over switch 830 will then couple the single input connector 44 to the distribution module 800. Similar as explained above the distribution module 800 will function to distribute the share of the signal power of the first input signal received from the branch module 820 in the first mode of operation and the signal power of the second input signal received from the single input connector 44 in the second mode of operation to the CSS output connectors 20.

Figure 14 shows still a further embodiment of a correlation table for use with a correlation module 600, similar as explained with reference to Figure 3. As shown, this correlation table comprises similar columns as explained in more detail with reference to Figure 3, which will cause the correlation module 600, similar as explained with reference to Figure 3. This means that there is provided a correlation linking the particular set 120 of user bands to a corresponding CSS module output 140. Additionally also the subsets of user bands are correlated to a first CSS output connector and a further output connector. Still further also the frequency translation subjected to the user bands of the subset of the at least one further CSS output connector is determined. In this way, similar as explained with reference to Figure 3, also in this embodiment the subsets of the further and first CSS output connectors each comprise an identical amount of user bands and the frequency translation ensures that the centre frequencies of the user bands of both subsets match. According to the embodiment of Figure 14, each of the user bands generated by the CSS module could comprise a user band identifier. According to some embodiments of the receiver devices, it could be required that a particular user band identifier matches a particular centre frequency. According to the embodiment explained above, for example it could be required that the centre frequency 1000MHz matches user band identifier UB1, centre frequency 1100MHz matches user band identifier UB2, etc.

As shown in Figure 14, different from the embodiment of Figure 3, the correlation table comprises an additional column referenced as "UB trans". According to this embodiment the references UB1, UB2, UB3, etc. serve as a user band identifier for the user bands the CSS module 100 generates. In this way, UB1 - UB10 are the unique user band identifiers for the set 120 of user bands 110 of the CSS module output signal 400 of the CSS module output 140.A. As explained in more detail above with reference to Figure 3, the CSS output interface will provide subset UB1-UB5 to the correlated first CSS output connector 20.A without frequency translation. The CSS output interface 500 will also provide subset UB6-UB10 to the further CSS output connector 20.B via the frequency translation module 510 which applies a frequency translation of 0,5GHZ. As further shown in Figure 14, according to this embodiment, the frequency translation module 510 also adapts the user band identifiers UB6-UB10 of the subset 220.B of user bands of corresponding further CSS output connector 20.B to the user band identifiers UB1-UB5 as shown in the column "UB Trans". In this way the user band identifiers UB1-UB5 of the user bands of the subset 220.B of the corresponding further CSS output connector 20.B will match the user band identifiers UB1-UB5 of the user bands of the subset 220.A of the first CSS output connector 20.A.

It is clear that alternative embodiments to that of Figure 14 are possible, as long as in general the frequency translation module 510 adapts the user band identifiers of the subset 220.B of user bands 110 of the respective corresponding further CSS output connector 20.B. The frequency translation module 510 performs this adaptation such that in general at least one of the user band identifiers of the user bands of the subset (220.B) of the respective corresponding further CSS output connector (20.B) respectively matches at least one of the user band identifiers of the user bands of the subset (220.A) of the first CSS output connector (20.A).

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive.

## Claims

1. A channel stacking system (1) comprising:
- A plurality of CSS output connectors (20), configured to provide a plurality of CSS output connector signals (200) to a respective plurality of connected groups (300) of receivers (102), each receiver (102) of the connected group (300) of receivers (102) configured to request a user band (110) of the CSS output connector signal (200);
- A CSS module (100) comprising one or more CSS module outputs (140) and configured to generate for each CSS module output (140) a corresponding CSS module output signal (400) comprising a set (120) of four or more user bands (110); and
- At least one CSS output interface (500) configured to respectively couple one CSS module output (140) to a corresponding CSS output connector subset (22) comprising two or more corresponding CSS output connectors (20), such that each of the corresponding CSS output connector signals (200) comprises a respective subset (220) comprising two or more user bands (110) of the corresponding CSS module output signal (400), wherein the corresponding CSS output connector subset (22) comprises a first CSS output connector (20.A) and at least one further CSS output connector (20B):
- the CSS output interface (500) coupled to the first CSS output connector (20.A) without frequency translation; and
- the CSS output interface (500) coupled to the at least one further CSS output connector (20.B) via a respective frequency translation module (510), which is configured to frequency translate the corresponding subset (220.B) of user bands (110).

2. A channel stacking system according to claim 1, **characterised in that** the CSS output interface (500) is further configured to respectively filter the CSS module output signal (400), such that each of the CSS output connector signals (200) of the CSS output connectors (20) of the corresponding CSS output connector subset (22) only comprises its corresponding subset (220) of two or more user bands (110).

3. A channel stacking system according to any of the preceding claims, **characterised in that** the CSS module (100) comprises a user band correlation module (600) that comprises a predetermined correlation between:
- each CSS module output (140) and a corresponding set (120) of four or more user bands (110); and
- respectively for each CSS module output (140), between each CSS output connector (20) of its CSS output connector subset (22) and a corresponding subset (220) comprising two or more user bands (110) of the set (120) of four or more user bands (110) of the CSS module output (140).

4. A channel stacking system according to any of the preceding claims, **characterised in that** the CSS module (100) comprises a digital Channel Stacking Switch implemented as a system on chip or an integrated circuit.

5. A channel stacking system according to any of the preceding claims, **characterised in that** it comprises:
- five or less CSS module outputs (140); and
- respectively two or more CSS output connectors (20) coupled to each CSS module output (140) via the CSS output interface (500).

6. A channel stacking system according to any of the preceding claims, **characterised in that** the respective frequency translation module (510) is configured to frequency translate the subset (220.B) of user bands (110) of the respective corresponding further CSS output connector (20.B), such that the respective frequency range of the subset (220.B) of user bands (110) of the respective corresponding further CSS output connector (20.B) at least partly overlaps with the frequency range of the user bands (110) of the first CSS output connector (20.A), and/or such that the rate of overlap of these frequency ranges is increased.

7. A channel stacking system according to any of the preceding claims, **characterised in that** the respective frequency translation module (510) is configured to frequency translate the subset (220.B) of user bands (110) of the respective corresponding further CSS output connector (20.B), such that the centre frequencies of one or more of the user bands of the subset (220.B) of the respective corresponding further CSS output connector (20.B) respectively match the centre frequencies of at least one of the user bands of the subset (220) of the first CSS output connector (20.A).

8. A channel stacking system according to any of the preceding claims, **characterised in that** each of the subsets (220) comprises an identical number of adjacent user bands (110); and/or **in that** the frequency ranges of the subsets (220) and/or the respective centre frequencies of the adjacent user bands of the subsets (220) of each of the one or more respective first CSS output connectors (20.A) match.

9. A channel stacking system, according to any of the preceding claims, **characterised in that** the user bands (110) of the set (120) of user bands (110) of the CSS module output signal (400) each comprise a unique user band identifier, and **in that** the respective frequency translation module (510) is further configured to adapt the unique user band identifiers of the subset (220.B) of user bands (110) of the respective corresponding further CSS output connector (20.B), such that at least one of the user band identifiers of the user bands of the subset (220.B) of the respective corresponding further CSS output connector (20.B) respectively matches at least one of the user band identifiers of the user bands of the subset (220.A) of the first CSS output connector (20.A).

10. A channel stacking system according to any of the preceding claims, **characterised in that** the channel stacking system comprises:
- a plurality of input connectors (10) connected to the CSS module (100) and configured to receive a plurality of downconverted IF satellite signals comprising a plurality of satellite transponders from at least one connected LNB; and
- a plurality of cascade output connectors (30) respectively coupled to the plurality of input connectors (10) and configured to cascade the plurality of downconverted IF satellite signals to a further channel stacking system (1).

11. A channel stacking system according to any of the preceding claims, **characterised in that** the channel stacking system further comprises:
- at least one input connector (40, 42, 44) configured to receive a first input signal from a first distribution network and/or a second input signal from a second distribution network;
- a first cascade output connector (50) configured to cascade the first input signal to a further channel stacking system (1);
- a branch module (820) arranged in the signal path of the first input signal to the first cascade output connector (50);
- a distribution module (800) coupled to the at least one input connector (40, 42, 44), the branch module (820) and the plurality of CSS output connectors (20), and configured to distribute the first or second input signal to the plurality of CSS output connectors (20);
- the distribution module (800) configured to operate:
- according to a first mode of operation, when the input signal originates from the first distribution network, wherein the branch module (820) provides a share of the signal power of the first input signal to the distribution module (800) such that the share of the signal power of this first input signal extracted by this branch module (820) for distribution by the distribution module (800) to the plurality of CSS output connectors (20), is smaller than the share of the signal power not extracted by this branch module (820) which is further distributed to the first cascade output connector (50);
- according to a second mode of operation, when the input signal originates from the second distribution network, wherein the signal power of the second input signal is distributed entirely by the distribution module (800) to the plurality of CSS output connectors (20).

12. A channel stacking system according to claim 11, **characterised in that** the channel stacking system (1) further comprises:
- a distribution module configurator (810) coupled to the distribution module (800) and configured to provide a signal to the distribution module (800) indicative of whether the input signal originates respectively from the first distribution network or the second distribution network;
- the distribution module (800) further configured to operate:
- according to a first mode of operation when the signal from the distribution module configurator (810) indicates that the input signal originates from the first distribution network,
- according to a second mode of operation when the signal from the distribution module configurator (810) indicates that the input signal originates from the second distribution network,

13. A channel stacking system according to claim 11 or 12, **characterised in that**, the first input signal is received from a first input connector (40) being coupled to the first cascade output connector (50) via the branch module (820), and the second input signal is received from a second input connector (42) being coupled to the distribution module (800); and/or
**characterised in that** the first input signal and the second input signal is alternatively received from a single input connector 44, whereby the channel stacking system (1) further comprises a change over switch 830 coupled to this single input connector 44, this change over switch 830 being coupled to the interface module configurator 810 and configured to couple the single input connector to the branch module 820 and the first cascade output connector 50 when in the first mode of operation, and to alternatively couple this single input connector (44) to the distribution module (800) when in the second mode of operation.

14. A channel stacking system according to any of the claims 11 to 13, **characterised in that**, according to the first mode of operation, the branch module (820) and/or the distribution module (800) is configured to selectively provide signal amplifiers in the signal path to the plurality of CSS output connectors (20).

15. A channel stacking system according to any of the claims 11 to 14, **characterised in that**, the distribution module (800) is configured to distribute the received signal power of the input signal evenly amongst the plurality of CSS output connectors (20); and/or
**characterized in that** the first distribution network comprises a terrestrial distribution network, and the second distribution network comprises a cable distribution network.

## Patentansprüche

1. Kanalstapelsystem (1), umfassend:
- eine Vielzahl von CSS-Ausgangsanschlüssen (20), die so ausgebildet sind, dass sie eine Vielzahl von CSS-Ausgangsanschlusssignalen (200) an eine jeweilige Vielzahl verbundener Gruppen (300) von Empfängern (102) liefern, wobei jeder Empfänger (102) der verbundenen Gruppe (300) von Empfängern (102) so ausgebildet ist, dass er ein Benutzerband (110) des CSS-Ausgangsanschlusssignals (200) anfordert,
- ein CSS-Modul (100), das einen oder mehrere CSS-Modulausgänge (140) umfasst und so ausgebildet ist, dass es für jeden CSS-Modulausgang (140) ein entsprechendes CSS-Modulausgangssignal (400) erzeugt, das eine Gruppe (120) von vier oder mehr Benutzerbändern (110) umfasst, und
- mindestens eine CSS-Ausgangsschnittstelle (500), die so ausgebildet ist, dass sie jeweils einen CSS-Modulausgang (140) mit einer entsprechenden CSS-Ausgangsanschluss-Untergruppe (22) koppelt, die zwei oder mehr entsprechende CSS-Ausgangsanschlüsse (20) umfasst, so dass jedes der entsprechenden CSS-Ausgangsanschlusssignale (200) eine entsprechende Untergruppe (220) umfasst, die zwei oder mehr Benutzerbänder (110) des entsprechenden CSS-Modulausgangssignals (400) umfasst, wobei die entsprechende CSS-Ausgangsanschluss-Untergruppe (22) einen ersten CSS-Ausgangsanschluss (20.A) und mindestens einen weiteren CSS-Ausgangsanschluss (20B) umfasst:
- die CSS-Ausgangsschnittstelle (500) mit dem ersten CSS-Ausgangsanschluss (20.A) ohne Frequenzumsetzung gekoppelt ist, und
- die CSS-Ausgangsschnittstelle (500) mit dem mindestens einen weiteren CSS-Ausgangsanschluss (20.B) über ein entsprechendes Frequenzumsetzungsmodul (510) gekoppelt ist, das so ausgebildet ist, dass es die Frequenz der entsprechenden Untergruppe (220.B) von Benutzerbändern (110) umsetzt.

2. Kanalstapelsystem nach Anspruch 1, **dadurch gekennzeichnet, dass** die CSS-Ausgangsschnittstelle (500) ferner ausgebildet ist, um das CSS-Modulausgangssignal (400) entsprechend zu filtern, so dass jedes der CSS-Ausgangsanschlusssignale (200) der CSS-Ausgangsanschlüsse (20) der entsprechenden CSS-Ausgangsanschluss-Untergruppe (22) nur seine entsprechende Untergruppe (220) von zwei oder mehr Benutzerbändern (110) umfasst.

3. Kanalstapelsystem nach einem der vorhergehenden Ansprüche, **dadurch gekennzeichnet, dass** das CSS-Modul (100) ein Benutzerband-Korrelationsmodul (600) umfasst, das eine vorbestimmte Korrelation zwischen:
- jedem CSS-Modulausgang (140) und einer entsprechenden Gruppe (120) von vier oder mehr Benutzerbändern (110) umfasst, und
- jeweils für jeden CSS-Modulausgang (140) zwischen jedem CSS-Ausgangsanschluss (20) seiner CSS-Ausgangsanschluss-Untergruppe (22) und einer entsprechenden Untergruppe (220) umfasst, bestehend aus zwei oder mehr Benutzerbändern (110) der Gruppe (120) von vier oder mehr Benutzerbändern (110) des CSS-Modulausgangs (140).

4. Kanalstapelsystem nach einem der vorhergehenden Ansprüche, **dadurch gekennzeichnet, dass** das CSS-Modul (100) einen digitalen Kanalstapelschalter umfasst, der als System auf einem Chip oder als integrierte Schaltung ausgeführt ist.

5. Kanalstapelsystem nach einem der vorhergehenden Ansprüche, **dadurch gekennzeichnet, dass** es Folgendes umfasst:
- fünf oder weniger CSS-Modulausgänge (140), und
- jeweils zwei oder mehr CSS-Ausgangsanschlüsse (20), die über die CSS-Ausgangsschnittstelle (500) mit jedem CSS-Modulausgang (140) gekoppelt sind.

6. Kanalstapelsystem nach einem der vorhergehenden Ansprüche, **dadurch gekennzeichnet, dass** das jeweilige Frequenzumsetzungsmodul (510) so ausgebildet ist, dass es die Frequenz der Untergruppe (220.B) von Benutzerbändern (110) des jeweils zugehörigen weiteren CSS-Ausgangsanschlusses (20.B) umsetzt, so dass der jeweilige Frequenzbereich der Untergruppe (220.B) von Benutzerbändern (110) des jeweils zugehörigen weiteren CSS-Ausgangsanschlusses (20.B) zumindest teilweise mit dem Frequenzbereich der Benutzerbänder (110) des ersten CSS-Ausgangsanschlusses (20.A) überlappt, und/oder derart, dass die Überlappungsrate dieser Frequenzbereiche erhöht wird.

7. Kanalstapelsystem nach einem der vorhergehenden Ansprüche, **dadurch gekennzeichnet, dass** das jeweilige Frequenzumsetzungsmodul (510) so ausgebildet ist, dass es die Frequenz der Untergruppe (220.B) von Benutzerbändern (110) des jeweils entsprechenden weiteren CSS-Ausgangsanschlusses (20.B) umsetzt, so dass die Mittenfrequenzen von einem oder mehreren der Benutzerbänder der Untergruppe (220.B) des entsprechenden weiteren CSS-Ausgangsanschlusses (20.B) jeweils mit den Mittenfrequenzen von mindestens einem der Benutzerbänder der Untergruppe (220) des ersten CSS-Ausgangsanschlusses (20.A) übereinstimmen.

8. Kanalstapelsystem nach einem der vorhergehenden Ansprüche, **dadurch gekennzeichnet, dass** jede der Untergruppen (220) eine identische Anzahl benachbarter Benutzerbänder (110) aufweist, und/oder dass die Frequenzbereiche der Untergruppen (220) und/oder die jeweiligen Mittenfrequenzen der benachbarten Benutzerbänder der Untergruppen (220) jedes des jeweils einen oder mehrerer der jeweils ersten CSS-Ausgangsanschlüsse (20.A) übereinstimmen.

9. Kanalstapelsystem nach einem der vorhergehenden Ansprüche, **dadurch gekennzeichnet, dass** die Benutzerbänder (110) der Gruppe (120) von Benutzerbändern (110) des CSS-Modulausgangssignals (400) jeweils einen eindeutigen Benutzerbandkennzeichner aufweisen, und dass das jeweilige Frequenzumsetzungsmodul (510) ferner so ausgebildet ist, dass es die eindeutigen Benutzerbandkennzeichner der Untergruppe (220.B) von Benutzerbändern (110) des jeweils entsprechenden weiteren CSS-Ausgangsanschlusses (20.B) anpasst, so dass mindestens einer der Benutzerbandkennzeichner der Benutzerbänder der Untergruppe (220.B) des entsprechenden weiteren CSS-Ausgangsanschlusses (20.B) jeweils mit mindestens einem der Benutzerbandkennzeichner der Benutzerbänder der Untergruppe (220.A) des ersten CSS-Ausgangsanschlusses (20.A) übereinstimmt.

10. Kanalstapelsystem nach einem der vorhergehenden Ansprüche, **dadurch gekennzeichnet, dass** das Kanalstapelsystem Folgendes umfasst:
- eine Vielzahl von Eingangsanschlüssen (10), die mit dem CSS-Modul (100) verbunden und so ausgebildet sind, dass sie eine Vielzahl herunterkonvertierter ZF-Satellitensignale empfangen, die eine Vielzahl von Satelliten-Transpondern von mindestens einem angeschlossenen rauscharmen Signalumsetzer enthalten, und
- eine Vielzahl von Kaskadenausgangsanschlüssen (30), die jeweils mit der Vielzahl von Eingangsanschlüssen (10) gekoppelt sind und so ausgebildet sind, dass sie die Vielzahl von abwärtskonvertierten ZF-Satellitensignalen zu einem weiteren Kanalstapelsystem (1) kaskadieren.

11. Kanalstapelsystem nach einem der vorhergehenden Ansprüche, **dadurch gekennzeichnet, dass** das Kanalstapelsystem ferner Folgendes umfasst:
- mindestens einen Eingangsanschluss (40, 42, 44), der so ausgebildet ist, dass er ein erstes Eingangssignal von einem ersten Verteilungsnetz und/oder ein zweites Eingangssignal von einem zweiten Verteilungsnetz empfängt,
- einen ersten Kaskadenausgangsanschluss (50), der so ausgebildet ist, dass er das erste Eingangssignal zu einem weiteren Kanalstapelsystem (1) kaskadiert,
- ein Verzweigungsmodul (820), das im Signalpfad des ersten Eingangssignals zum ersten Kaskadenausgangsanschluss (50) angeordnet ist,
- ein Verteilungsmodul (800), das mit dem mindestens einen Eingangsanschluss (40, 42, 44), dem Verzweigungsmodul (820) und der Vielzahl von CSS-Ausgangsanschlüssen (20) gekoppelt ist und so ausgebildet ist, dass es das erste oder zweite Eingangssignal auf die Vielzahl von CSS-Ausgangsanschlüssen (20) verteilt,
- das Verteilungsmodul (800), das für folgenden Betrieb ausgebildet ist:
- nach einer ersten Betriebsart, wenn das Eingangssignal aus dem ersten Verteilungsnetz stammt, wobei das Verzweigungsmodul (820) einen Anteil der Signalleistung des ersten Eingangssignals an das Verteilungsmodul (800) liefert, so dass der Anteil der Signalleistung dieses ersten Eingangssignals, der von diesem Verzweigungsmodul (820) zur Verteilung durch das Verteilungsmodul (800) an die Vielzahl von CSS-Ausgangsanschlüssen (20) extrahiert wird, kleiner ist als der Anteil des von diesem Verzweigungsmodul (820) nicht extrahierten Signalleistungsanteils, der zum ersten Kaskadenausgangsanschluss (50) weiterverteilt wird,
- nach einer zweiten Betriebsart, wenn das Eingangssignal aus dem zweiten Verteilungsnetz stammt, wobei die Signalleistung des zweiten Eingangssignals vollständig durch das Verteilungsmodul (800) an die Vielzahl von CSS-Ausgangsanschlüssen (20) verteilt wird.

12. Kanalstapelsystem nach Anspruch 11, **dadurch gekennzeichnet, dass** das Kanalstapelsystem (1) ferner Folgendes umfasst:
- einen Verteilungsmodulkonfigurator (810), der mit dem Verteilungsmodul (800) gekoppelt und so ausgebildet ist, dass er ein Signal an das Verteilungsmodul (800) liefert, welches anzeigt, ob das Eingangssignal aus dem ersten Verteilungsnetz bzw. dem zweiten Verteilungsnetz stammt,
- das Verteilungsmodul (800) ferner für folgenden Betrieb ausgebildet ist:
- nach einer ersten Betriebsart, wenn das Signal des Verteilungsmodulkonfigurators (810) anzeigt, dass das Eingangssignal aus dem ersten Verteilungsnetz stammt,
- nach einer zweiten Betriebsart, wenn das Signal des Verteilungsmodulkonfigurators (810) anzeigt, dass das Eingangssignal aus dem zweiten Verteilungsnetz stammt.

13. Kanalstapelsystem nach Anspruch 11 oder 12, **dadurch gekennzeichnet, dass** das erste Eingangssignal von einem ersten Eingangsanschluss (40) empfangen wird, der über das Verzweigungsmodul (820) mit dem ersten Kaskadenausgangsanschluss (50) gekoppelt ist, und das zweite Eingangssignal von einem zweiten Eingangsanschluss (42) empfangen wird, der mit dem Verteilungsmodul (800) gekoppelt ist, und/oder
**dadurch gekennzeichnet, dass** das erste Eingangssignal und das zweite Eingangssignal alternativ von einem einzelnen Eingangsanschluss (44) empfangen werden, wobei das Kanalstapelsystem (1) ferner einen Wechselschalter (830) umfasst, der mit diesem einzelnen Eingangsanschluss (44) gekoppelt ist, wobei dieser Wechselschalter (830) mit dem Schnittstellenmodulkonfigurator (810) gekoppelt ist und so ausgebildet ist, dass er den einzelnen Eingangsanschluss mit dem Verzweigungsmodul (820) und dem ersten Kaskadenausgangsanschluss (50) in der ersten Betriebsart koppelt, und alternativ diesen einzelnen Eingangsanschluss (44) in der zweiten Betriebsart mit dem Verteilungsmodul (800) koppelt.

14. Kanalstapelsystem nach einem der Ansprüche 11 bis 13, **dadurch gekennzeichnet, dass** das Verzweigungsmodul (820) und/oder das Verteilungsmodul (800) entsprechend der ersten Betriebsart so ausgebildet ist, dass es selektiv Signalverstärker im Signalpfad an die Vielzahl von CSS-Ausgangsanschlüssen (20) liefert.

15. Kanalstapelsystem nach einem der Ansprüche 11 bis 14, **dadurch gekennzeichnet, dass** das Verteilungsmodul (800) so ausgebildet ist, dass es die empfangene Signalleistung des Eingangssignals gleichmäßig an die Vielzahl von CSS-Ausgangsanschlüssen (20) verteilt, und/oder
**dadurch gekennzeichnet, dass** das erste Verteilungsnetz ein terrestrisches Verteilungsnetz umfasst und das zweite Verteilungsnetz ein Kabelverteilungsnetz umfasst.

## Revendications

1. Système d'empilement de canaux (1) comprenant :
- une pluralité de connecteurs de sortie CSS (20), configurés pour délivrer une pluralité de signaux de connecteurs de sortie CSS (200) à une pluralité respective de groupes connectés (300) de récepteurs (102), chaque récepteur (102) du groupe connecté (300) de récepteurs (102) configuré pour demander une bande utilisateur (110) du signal de connecteur de sortie CSS (200) ;
- un module CSS (100) comprenant une ou plus sorties de module CSS (140) et configuré pour générer pour chaque sortie de module CSS (140) un signal de sortie de module CSS correspondant (400) comprenant un ensemble (120) de quatre ou plus bandes utilisateur (110) ; et
- au moins une interface de sortie CSS (500) configurée pour coupler respectivement une sortie de module CSS (140) à un sous-ensemble de connecteurs de sortie CSS correspondant (22) comprenant deux ou plus connecteurs de sortie CSS correspondants (20), de manière à ce que chacun des signaux de connecteurs de sortie CSS correspondants (200) comprenne un sous-ensemble respectif (220) comprenant deux ou plus bandes utilisateur (110) du signal de sortie de module CSS correspondant (400), dans lequel le sous-ensemble de connecteurs de sortie CSS correspondants (22) comprend un premier connecteur de sortie CSS (20.A) et au moins un connecteur de sortie CSS supplémentaire (20B) ;
- l'interface de sortie CSS (500) couplée au premier connecteur de sortie CSS (20.A) sans conversion de fréquence ; et
- l'interface de sortie CSS (500) couplée à l'au moins un connecteur de sortie CSS supplémentaire (20.B) via un module de conversion de fréquence respectif (510), qui est configuré pour convertir en fréquence le sous-ensemble correspondant (220.B) de bandes utilisateur (110).

2. Système d'empilement de canaux selon la revendication 1, **caractérisé en ce que** l'interface de sortie CSS (500) est en outre configurée pour filtrer respectivement le signal de sortie de module CSS (400), de manière à ce que chacun des signaux de connecteurs de sortie CSS (200) des connecteurs de sortie CSS (20) du sous-ensemble de connecteurs de sortie CSS correspondant (22) comprenne uniquement son sous-ensemble correspondant (220) de deux ou plus bandes utilisateur (110).

3. Système d'empilement de canaux selon l'une quelconque des revendications précédentes, **caractérisé en ce que** le module CSS (100) comprend un module de corrélation de bande utilisateur (600) qui comprend une corrélation prédéterminée entre :
- chaque sortie de module CSS (140) et un ensemble correspondant (120) de quatre ou plus bandes utilisateur (110) ; et
- respectivement pour chaque sortie de module CSS (140), entre chaque connecteur de sortie CSS (20) de son sous-ensemble de connecteurs de sortie CSS (22) et un sous-ensemble correspondant (220) comprenant deux ou plus bandes utilisateur (110) de l'ensemble (120) de quatre ou plus bandes utilisateur (110) de la sortie de module CSS (140).

4. Système d'empilement de canaux selon l'une quelconque des revendications précédentes, **caractérisé en ce que** le module CSS (100) comprend un commutateur d'empilement de canaux (CSS) numérique déployé en tant que système sur une puce ou un circuit intégré.

5. Système d'empilement de canaux selon l'une quelconque des revendications précédentes, **caractérisé en ce qu'**il comprend :
- cinq ou moins sorties de modules CSS (140) ; et
- respectivement deux ou plus connecteurs de sortie CSS (20) couplés à chaque sortie de module CSS (140) via l'interface de sortie CSS (500).

6. Système d'empilement de canaux selon l'une quelconque des revendications précédentes, **caractérisé en ce que** le module de conversion de fréquence respectif (510) est configuré pour convertir en fréquence le sous-ensemble (220.B) de bandes utilisateur (110) du connecteur de sortie CSS supplémentaire correspondant respectif (20.B), de manière à ce que la plage de fréquences respective du sous-ensemble (220.B) de bandes utilisateur (110) du connecteur de sortie CSS supplémentaire correspondant respectif (20.B) chevauche au moins partiellement la plage de fréquences des bandes utilisateur (110) du premier connecteur de sortie CSS (20.A), et/ou de manière à ce que le taux de chevauchement de ces plages de fréquences soit augmenté.

7. Système d'empilement de canaux selon l'une quelconque des revendications précédentes, **caractérisé en ce que** le module de conversion de fréquence respectif (510) est configuré pour convertir en fréquence le sous-ensemble (220.B) de bandes utilisateur (110) du connecteur de sortie CSS supplémentaire correspondant respectif (20.B), de manière à ce que les fréquences centrales d'une ou plus des bandes utilisateur du sous-ensemble (220.B) du connecteur de sortie CSS supplémentaire correspondant respectif (20.B) correspondent respectivement aux fréquences centrales d'au moins l'une des bandes utilisateur du sous-ensemble (220) du premier connecteur de sortie CSS (20.A).

8. Système d'empilement de canaux selon l'une quelconque des revendications précédentes, **caractérisé en ce que** chacun des sous-ensembles (220) comprend un nombre identique de bandes utilisateur adjacentes (110) ; et/ou **en ce que** les plages de fréquence des sous-ensembles (220) et/ou les fréquences centrales respectives des bandes utilisateur adjacentes des sous-ensembles (220) de chacun des un ou plus premiers connecteurs de sortie CSS respectifs (20.A) correspondent.

9. Système d'empilement de canaux selon l'une quelconque des revendications précédentes, **caractérisé en ce que** les bandes utilisateur (110) de l'ensemble (120) des bandes utilisateur (110) du signal de sortie de module CSS (400) comprennent chacun un identifiant de bande utilisateur unique, et **en ce que** le module de conversion de fréquence respectif (510) est en outre configuré pour adapter les identifiants de bande utilisateur uniques du sous-ensemble (220.B) des bandes utilisateur (110) du connecteur de sortie CSS supplémentaire correspondant respectif (20.B), de manière à ce qu'au moins l'un des identifiants de bande utilisateur des bandes utilisateur du sous-ensemble (220.B) du connecteur de sortie CSS supplémentaire correspondant respectif (20.B) corresponde respectivement à au moins l'un des identifiants de bande utilisateur des bandes utilisateur du sous-ensemble (220.A) du premier connecteur de sortie CSS (20.A).

10. Système d'empilement de canaux selon l'une quelconque des revendications précédentes, **caractérisé en ce que** le système d'empilement de canaux comprend :
- une pluralité de connecteurs d'entrée (10) connectés au module CSS (100) et configuré pour recevoir une pluralité de signaux satellites IF abaissés en fréquence comprenant une pluralité de transpondeurs satellite en provenance d'au moins un LNB connecté ; et
- une pluralité de connecteurs de sortie en cascade (30) couplés respectivement à la pluralité de connecteurs d'entrée (10) et configurés pour mettre en cascade la pluralité de signaux satellite IF abaissés en fréquence en un système d'empilement de canaux supplémentaire (1).

11. Système d'empilement de canaux selon l'une quelconque des revendications précédentes, **caractérisé en ce que** le système d'empilement de canaux comprend en outre :
- au moins un connecteur d'entrée (40, 42, 44) configuré pour recevoir un premier signal d'entrée depuis un premier réseau de distribution et/ou un deuxième signal d'entrée depuis un deuxième réseau de distribution ;
- un premier connecteur de sortie en cascade (50) configuré pour mettre en cascade le premier signal d'entrée en un système d'empilement de canaux supplémentaire (1) ;
- un module de dérivation (820) agencé sur la trajectoire de signal du premier signal d'entrée du premier connecteur de sortie en cascade (50) ;
- un module de distribution (800) couplé à l'au moins un connecteur d'entrée (40, 42, 44), le module de dérivation (820) et la pluralité de connecteurs de sortie CSS (20), et configuré pour distribuer le premier ou le deuxième signal d'entrée à la pluralité de connecteurs de sortie CSS (20) ;
- le module de distribution (800) configuré pour fonctionner :
- selon un premier mode de fonctionnement, quand le signal d'entrée provient du premier réseau de distribution, dans lequel le module de dérivation (820) délivre une part de la puissance de signal du premier signal d'entrée au module de distribution (800) de manière à ce que la part de la puissance du signal de ce premier signal d'entrée extraite par ce module de dérivation (820) pour distribution par le module de distribution (800) à la pluralité de connecteurs de sortie CSS (20), est inférieure à la part de la puissance de signal non extraite par ce module de dérivation (820) qui est en outre distribuée au premier connecteur de sortie en cascade (50) ;
- selon un deuxième mode de fonctionnement, quand le signal d'entrée provient du deuxième réseau de distribution, dans lequel la puissance de signal du deuxième signal d'entrée est distribuée entièrement par le module de distribution (800) à la pluralité de connecteurs de sortie CSS (20).

12. Système d'empilement de canaux selon la revendication 11, **caractérisé en ce que** le système d'empilement de canaux (1) comprend en outre :
- un configurateur de module de distribution (810) couplé au module de distribution (800) et configuré pour délivrer un signal au module de distribution (800) qui indique si le signal d'entrée provient respectivement du premier réseau distribution ou du deuxième réseau de distribution ;
- le module de distribution (800) configuré en outre pour fonctionner :
- selon un premier mode de fonctionnement quand le signal en provenance du configurateur de module de distribution (810) indique que le signal d'entrée provient du premier réseau de distribution,
- selon un deuxième mode de fonctionnement quand le signal en provenance du configurateur de module de distribution (810) indique que le signal d'entrée provient du deuxième réseau de distribution.

13. Système d'empilement de canaux selon la revendication 11 ou 12, **caractérisé en ce que**, le premier signal d'entrée est reçu depuis un premier connecteur d'entrée (40) étant couplé au premier connecteur de sortie en cascade (50) via le module de dérivation (820), et le deuxième signal d'entrée est reçu depuis un deuxième connecteur d'entrée (42) étant couplé au module de distribution (800) ; et/ou
**caractérisé en ce que** le premier signal d'entrée et le deuxième signal d'entrée sont alternativement reçus depuis un connecteur d'entrée unique (44), moyennant quoi le système d'empilement de canaux (1) comprend en outre un commutateur de transfert (830) couplé à ce connecteur d'entrée unique (44), ce commutateur de transfert (830) étant couplé au configurateur de module d'interface (810) et configuré pour coupler le connecteur d'entrée unique au module de dérivation (820) et au premier connecteur de sortie en cascade (50) lorsqu'il est dans le premier mode de fonctionnement, et pour alternativement coupler ce connecteur d'entrée unique (44) au module de distribution (800) lorsqu'il est quand dans le deuxième mode de fonctionnement.

14. Système d'empilement de canaux selon l'une quelconque des revendications 11 à 13, **caractérisé en ce que**, selon le premier mode de fonctionnement, le module de dérivation (820) et/ou le module de distribution (800) est configuré pour délivrer sélectivement des amplificateurs de signaux dans la trajectoire de signaux à la pluralité de connecteurs de sortie CSS (20).

15. Système d'empilement de canaux selon l'une quelconque des revendications 11 à 14, **caractérisé en ce que**, le module de distribution (800) est configuré pour distribuer la puissance de signal reçue du signal d'entrée de manière homogène entre la pluralité de connecteurs de sortie CSS (20) ; et/ou
**caractérisé en ce que** le premier réseau de distribution comprend un réseau de distribution terrestre, et le deuxième réseau de distribution comprend un réseau de distribution câblé.
